(19) Europäisches Patentamt
European Patent Office
Office européen des brevets

(11) **EP 2 088 537 A1**

(12) **EUROPEAN PATENT APPLICATION**
published in accordance with Art. 153(4) EPC

(43) Date of publication:
**12.08.2009 Bulletin 2009/33**

(21) Application number: **07792960.2**

(22) Date of filing: **24.08.2007**

(51) Int Cl.:
**G06K 9/72** (2006.01)

(86) International application number:
**PCT/JP2007/066431**

(87) International publication number:
**WO 2008/044393 (17.04.2008 Gazette 2008/16)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.10.2006 JP 2006280413**

(71) Applicant: **Kabushiki Kaisha Toshiba**
**Minato-ku,**
**Tokyo 105-8001 (JP)**

(72) Inventor: **HAMAMURA, Tomoyuki**
**Minato-ku, Tokyo 105-8001 (JP)**

(74) Representative: **Kramer - Barske - Schmidtchen**
**European Patent Attorneys**
**Landsberger Strasse 300**
**80687 München (DE)**

(54) **WORD RECOGNIZING METHOD AND WORD RECOGNIZING PROGRAM**

(57) In word recognition using a character recognition result, a recognition-process is executed for each character of an input character string corresponding to a word to be recognized, and a probability is determined that the feature appears, which is obtained as a result of character recognition using, as a condition, each character of each word in a word dictionary having stored therein candidates of the word to be recognized, and this probability is divided by a probability that the feature obtained as a result of character recognition appears. Each division result obtained for each character of each word in the word dictionary is multiplied for all the characters, and all the multiplication results obtained for each word in the word dictionary are added. Then, the multiplication result obtained for each word in the word dictionary is divided by the addition result, and based on this result, the recognition result of the particular word is obtained.

F I G. 1

**Description**

Technical Field

The present invention relates to a word recognition method for performing word recognition in an optical character reader for optically reading a word that consists of a plurality of characters described on a material targeted for reading. In addition, the present invention relates to a storage medium that stores a word recognition program for causing the word recognition processing.

Background Art

In general, in an optical character reader, for example, in the case where characters described on a material targeted for reading is read, even if individual character recognition precision is low, one can read such characters precisely by using knowledge of words. Conventionally, a variety of methods have been proposed.

These methods include the one disclosed by Jpn. Pat. Appln. KOKAI Publication No. 2001-283157 which is capable of word recognition with high accuracy using the posteriori probability as a word assessment value even in the case where the number of characters is not constant.

Disclosure of Invention

(Problem to be Solved by the Invention)

In the method disclosed in the patent publication described above, the error in the approximate calculation of the posteriori probability providing the word assessment value is large inconveniently for rejection. The rejection is carried out optimally in the case where the posteriori probability is not more than a predetermined value. In the techniques described in the aforementioned publication, however, the rejection may fail depending on the error. In the case where the rejection is carried out using the techniques described above, therefore, the difference from the assessment value for other words is checked. This method, however, is heuristic and not considered an optimum method.

Accordingly, it is an object of the present invention to provide a word recognition method and a word recognition program in which the error can be suppressed in the approximate calculation of the posteriori probability and the rejection can be made with high accuracy.

(Means for Solving the Problem)

According to the present invention, there is provided a word recognition method comprising: a character recognition processing step of performing recognition processing of an input character string that corresponds to a word to be recognized by each character, thereby obtaining the character recognition result; a probability calculation step of obtaining a probability at which characteristics obtained as the character recognition result are generated by the character recognition processing by conditioning characters of words contained in a word dictionary that stores in advance a candidate of the word to be recognized; a first computation step of performing a predetermined first computation between a probability obtained by the probability calculation step and the characteristics obtained as the character recognition result by the character recognition processing step; a second computation step of performing a predetermined second computation between computation results obtained by the first computation on each character of each word in the word dictionary; a third computation step of adding up all computation results obtained for each word in the word dictionary by the second computation; a fourth computation step of dividing computation results obtained by the second computation on each character of each word in the word dictionary by computation results in the third computation step; and a word recognition processing step of obtaining a word recognition result of the word based on computation results in the fourth computation step.

In addition, according to the present invention, there is provided a word recognition method comprising: a delimiting step of delimiting an input character string that corresponds to a word to be recognized by each character; a step of obtaining plural kinds of delimiting results considering whether character spacing is provided or not by character delimiting caused by the delimiting step; a character recognition processing step of performing recognition processing for each character as all the delimiting results obtained by the step of obtaining plural kinds of delimiting results; a probability calculation step of obtaining a probability at which characteristics obtained as the result of character recognition are generated by the character recognition step by computing the characters of the words contained in the word dictionary that stores in advance candidates of words to be recognized; a first computation step of performing a predetermined first computation between a probability obtained by the probability calculation step and the characteristics obtained as the character recognition result by the character recognition processing step; a second computation step of performing a predetermined second computation between computation results obtained by the first computation on each character of each word in the word dictionary; a third computation step of adding up all computation results obtained for each word in the word dictionary by the second computation; a fourth computation step of dividing computation results obtained by the second computation on each character of each word in the word dictionary by computation results in the third computation step; and a word recognition processing step of obtaining a word recognition result of the word based on computation results in the fourth computation step.

In addition, according to the present invention, there is provided a word recognition program for causing a computer to execute a word recognition process, comprising: a character recognition processing step of performing recognition processing of an input character string that corresponds to a word to be recognized by each character; a probability calculation step of obtaining a probability at which characteristics obtained as the character recognition result are generated by the character recognition processing by conditioning characters of words contained in a word dictionary that stores in advance a candidate of the word to be recognized; a first computation step of performing a predetermined first computation between a probability obtained by the probability calculation step and the characteristics obtained as the character recognition result by the character recognition processing step; a second computation step of performing a predetermined second computation between computation results obtained by the first computation on each character of each word in the word dictionary; a third computation step of adding up all computation results obtained for each word in the word dictionary by the second computation; a fourth computation step of dividing computation results obtained by the second computation on each character of each word in the word dictionary by computation results in the third computation step; and a word recognition processing step of obtaining a word recognition result of the word based on computation results in the fourth computation step.

Brief Description of Drawings

FIG. 1 is a block diagram schematically depicting a configuration of a word recognition system for achieving a word recognition method according to an embodiment of the present invention;
FIG. 2 is a view showing a description example of a mail on which an address is described;
FIG. 3 is a flow chart illustrating an outline of the word recognition method;
FIG. 4 is a view showing a character pattern identified as a city name;
FIG. 5 is a view showing the contents of a word dictionary;
FIG. 6 is a view showing the contents of a probability table;
FIG. 7 is a view showing the contents of a probability table;
FIG. 8 is a view showing a description example of a mail on which an address is described;
FIG. 9 is a view showing a character pattern identified as a city name;
FIG. 10 is a view showing the contents of a word dictionary;
FIG. 11 is a view showing the contents of a probability table;
FIG. 12 is a view showing a description example of a mail on which an address is described;
FIG. 13 is a view showing a character pattern identified as a city name;
FIG. 14A is a view showing a part of a word dictionary;
FIG. 14B is a view showing a part of a word dictionary;
FIG. 14C is a view showing a part of a word dictionary;
FIG. 15 is a view showing a set of categories relevant to the word dictionary shown in FIG. 14A to FIG. 14C;
FIG. 16 is a view showing a description example of a mail on which an address is described;
FIG. 17 is a view showing a character pattern identified as a city name;
FIG. 18 is a view showing the contents of a word dictionary;
FIG. 19 is a view showing a set of categories relevant to the word dictionary shown in FIG. 18;
FIG. 20 is a view showing cells processed as representing a city name;
FIG. 21A is a view showing one of character delimiting pattern candidates;
FIG. 21B is a view showing one of character delimiting pattern candidates;
FIG. 21C is a view showing one of character delimiting pattern candidates;
FIG. 21D is a view showing one of character delimiting pattern candidates;
FIG. 22 is a view showing the contents of a word dictionary;
FIG. 23A is a view showing one of categories relevant to the word dictionary shown in FIG. 22;
FIG. 23B is a view showing one of categories relevant to the word dictionary shown in FIG. 22;
FIG. 23C is a view showing one of categories relevant to the word dictionary shown in FIG. 22;
FIG. 23D is a view showing one of categories relevant to the word dictionary shown in FIG. 22;
FIG. 24 is a view showing the recognition result of each unit relevant to the character delimiting pattern candidate; and

EP 2 088 537 A1

FIG. 25 is a view showing characteristics of character intervals.

Best Mode for Carrying Out the Invention

Hereinafter, embodiments of the present invention will be described with reference to the accompanying drawings.

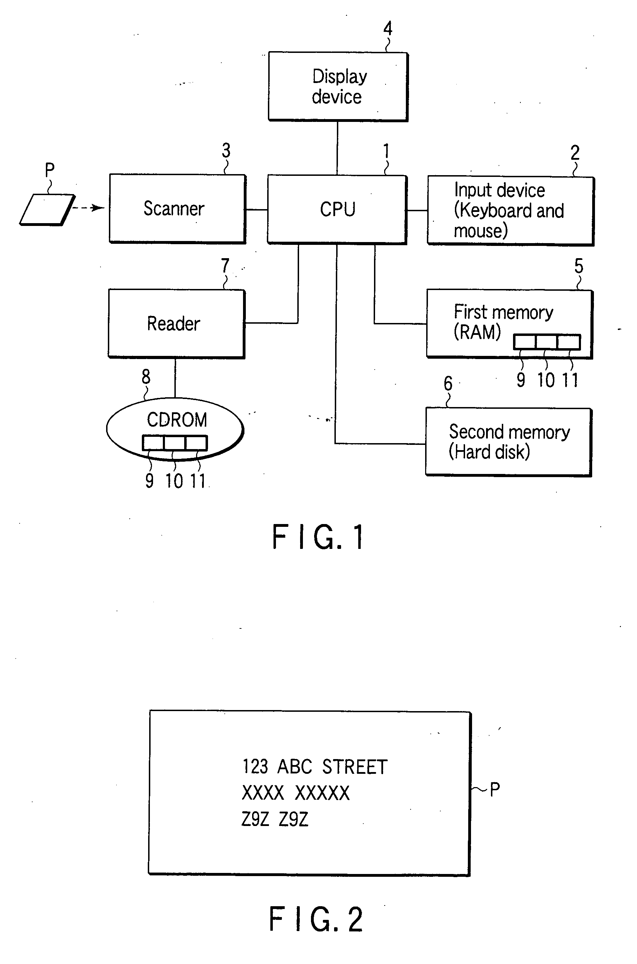

FIG. 1 schematically depicts a configuration of a word recognition system for achieving a word recognition method according to an embodiment of the present invention.

In FIG. 1, this word recognition system is composed of: a CPU (central processing unit) 1; an input device 2; a scanner 3 that is image input means; a display device 4; a first memory 5 that is storage means; a second memory 6 that is storage means; and a reader 7.

The CPU 1 executes an operating system program stored in the second memory 6 and an application program (word recognition program or the like) stored in the second memory 6, thereby performing word recognition processing as described later in detail.

The input device 2 consists of a keyboard and a mouse, for example, and is used for a user to perform a variety of operations or input a variety of data.

The scanner 3 reads characters of a word described on a material targeted for reading through scanning, and inputs these characters. The above material targeted for reading includes a mail P on which an address is described, for example. In a method of describing the above address, as shown in FIG. 2, postal number, name of state, city name, street name, and street number are described in order from the lowest line and from the right side.

The display device 4 consists of a display unit and a printer, for example, and outputs a variety of data.

The first memory 5 is composed of a RAM (random access memory), for example. This memory is used as a work memory of the CPU 1, and temporarily stores a variety of data or the like being processed.

The second memory 6 is composed of a hard disk unit, for example, and stores a variety of programs or the like for operating the CPU 1. The second memory 6 stores: an operating system program for operating the input device 2, scanner 3, display device 4, first memory 5, and reader 7; a word recognition program and a character dictionary 9 for recognizing characters that configure a word; a word dictionary 10 for word recognition; and a probability table 11 that stores a probability of the generation of characters that configure a word or the like. The above word dictionary 10 stores in advance a plurality of candidates of words to be recognized. This dictionary can be used as a city name dictionary that registers regions in which word recognition systems are installed, for example, city names in states.

The reader 7 consists of a CD-ROM drive unit or the like, for example, and reads a word recognition program stored in a CD-ROM 8 that is a storage medium and a word dictionary 10 for word recognition. The word recognition program, character dictionary 9, word dictionary 10, and probability table 1 read by the reader 7 are stored in the second memory 6.

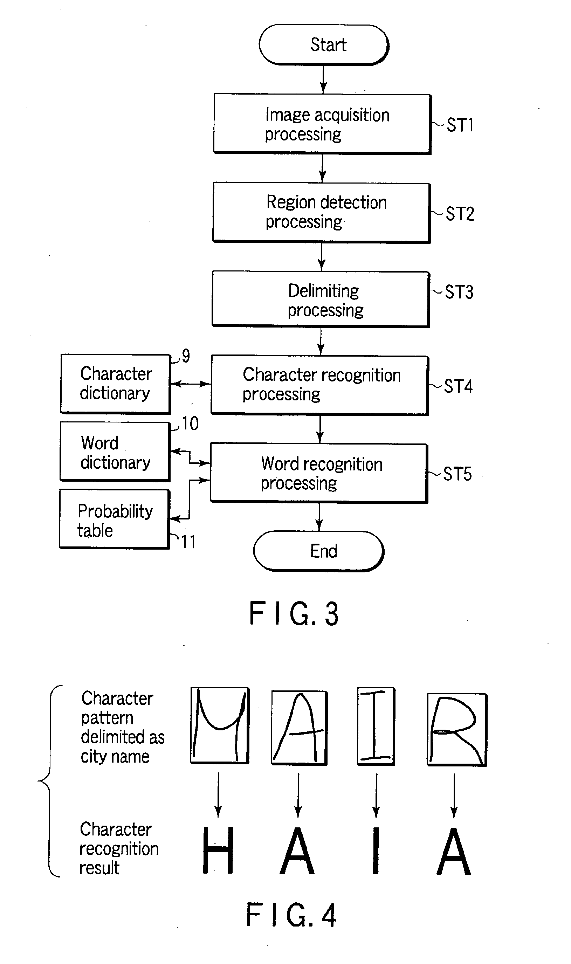

Now, an outline of a word recognition method will be described with reference to a flow chart shown in FIG. 3.

First, image acquisition processing for acquiring (reading) an image of a mail P is performed by means of the scanner 3 (ST1). Region detection processing for detecting a region in which an address is described is performed by using the image acquired by the image acquisition processing (ST2). There is performed delimiting processing for using vertical projection or horizontal projection, thereby identifying a character pattern in a rectangular region for each character of a word that corresponds to a city name, from a description region of the address detected by the region detection processing (ST3). Character recognition processing for acquiring a character recognition candidate is performed based on a degree of analogy obtained by comparing a character pattern of each character of the word identified by this delimiting processing with a character pattern stored in the character dictionary 9 (ST4). By using the recognition result of each character of the word obtained by this character recognition processing; each of characters of the city names stored in the word dictionary 10; and the probability table 11, the posteriori probability is calculated by each city name contained in the word dictionary 10, and there is performed word recognition processing in which a word with its highest posteriori probability is recognized (ST5). Each of the above processing functions is controlled by means of the CPU 1.

When character pattern delimiting processing is performed in accordance with the step 3, a word break may be judged based on a character pattern for each character and a gap in size between the patterned characters. In addition, it may be judged whether or not character spacing is provided based on the gap in size.

A word recognition method according to an embodiment of the present invention is achieved in such a system configuration. Now, an outline of the word recognition method will be described below.

1. OUTLINE

For example, consider character reading by an optical character reader. Although no problem will occur when the character reader has high character reading performance, and hardly makes a mistake, for example, it is difficult to achieve such high performance in recognition of a handwritten character. Thus, recognition precision is enhanced by using knowledge of words. Specifically, a word that is believed to be correct is selected from a word dictionary. Because of this, a certain evaluation value is calculated for each word, and a word with its highest (lowest) evaluation value is obtained as a recognition result. Although a variety of evaluation functions as described previously are propose, a variety of problems as described previously still remain unsolved.

In the present embodiment, a posteriori probability considering a variety of problems as described previously is used as an evaluation function. In this way, all data concerning a difference in the number of characters, the ambiguity of word delimiting, the absence of character spacing, noise entry, and character break can be naturally incorporated in one evaluation function by calculation of probability.

Now, a general theory of Bayes Estimation used in the present invention will be described below.

2. GENERAL THEORY OF BAYES ESTIMATION

An input pattern (input character string) is defined as "x". In recognition processing, certain processing is performed for "x", and the classification result is obtained. This processing can be roughly divided into the two processes below.

(1) Characteristic "r" (= R(x)) is obtained by multiplying characteristics extraction processing R for obtaining any characteristic quantity relevant to "x".
(2) The classification result "ki" is obtained by using any evaluation method relevant to the characteristic "r".

The classification result "ki" corresponds to the "recognition result". In word recognition, note that the "recognition result" of character recognition is used as one of the characteristics. Hereinafter, the terms "characteristics" and "recognition result" are used distinctly.

The Bayes Estimation is used as an evaluation method in the second process. A category "ki" with its highest posteriori probability $P(k_i|r)$ is obtained as a result of recognition. In the case where it is difficult or impossible to directly calculate the posteriori probability $P(k_i|r)$, the probability is calculated indirectly by using Bayes Estimation Theory, i.e., the following formula

[formula 1]

$$P(k_i|r) = \frac{P(r|k_i)P(k_i)}{P(r)} \qquad (1)$$

A denominator P(r) is a constant that does not depend on "i". Thus, a numerator P(p|ki) P(ki) is calculated, whereby a magnitude of the posteriori probability $P(k_i|r)$ can be evaluated.

Now, for a better understanding of the following description, a description will be given to the Bayes Estimation in word recognition when the number of characters is constant. In this case, the Bayes Estimation is effective in English or any other language in which a word break may occur.

3. BAYES ESTIMATION WHEN THE NUMBER OF CHARACTERS IS CONSTANT

3.1 Definition of Formula

This section assumes that character and word delimitings are completely successful, and the number of characters is fixedly determined without noise entry between characters. The following formulas are defined.

[formula 2]

· Number of characters L
· Category set $K = \{k_i\}$
$k_i = \hat{w}_i, \hat{w}_i \in \hat{w}, \hat{w}$ : Set of words with the number of characters L
· $\hat{w}_i = (\hat{w}_{i1}, \hat{w}_{i2}, ..., \hat{w}_{iL})$
$\hat{w}_{ij}$: j-th character of $\hat{w}_i$ $\hat{w}_{ij} \in C$,
C : Character set
· Characteristics $r = (r_1, r_2, r_3, ..., r_L)$
$r_i$: Character characteristics of i-th character
(= character recognition result)

(Example: First candidate, first to third candidates, candidates having a predetermined similarity, first and second candidates and its similarity or the like)

In the foregoing description, "wa" may be expressed in place of "$\hat{w}_i$".

At this time, assume that a written word is estimated based on the Bayes Estimation.

[formula 3]

$$P(k_i|r) = \frac{P(r|k_i)P(k_i)}{P(r)} \tag{2}$$

P(r|ki) is represented as follows.

[formula 4]

$$P(r|k_i) = P(r_1|\hat{w}_{i1})P(r_2|\hat{w}_{i2})\cdots P(r_L|\hat{w}_{iL}) = \prod_{i=1}^{L} P(r_j|\hat{w}_{ij}) \tag{3}$$

Assume that P(ki) is statistically obtained in advance. For example, reading an address of a mail is considered as depending on a position in a letter or a position in line as well as statistics of address.

Although P(r|ki) is represented as a product, this product can be converted into addition by using an algorithm, for example, without being limited thereto. This fact applies to the following description.

3.2 Approximation for Practical Use

A significant difference in performance of recognition may occur depending on what is used as a characteristic "ri".

3.2.1 When a first candidate is used

Consider that a "character specified as a first candidate" is used as a character characteristic "ri". This character is defined as follows.

· Character set C = {ci}
Example) ci: Numeral ci: Alphabetical upper-case or lower-case letter
· Character characteristic set E = {ei}
ei = (the first candidate is "ci")
· ri ∈ E

For example, assume that "alphabetical upper-case and lower-case letters + numerals" is a character set C. The types of characteristics "ei" and types of characters "ci" have n (C) = n (E) 62 ways. Thus, there are $62^2$ combinations of (ei, cj). $62^2$ ways of P(ei|cj) are provided in advance, whereby the above formula (3) is used for calculation. Specifically, for example, in order to obtain P(ei|"A"), many samples of "A" are supplied to characteristics extraction processing R, and the frequency of the generation of each characteristic "ei" may be checked.

3.2.2 Approximation

Here, the following approximations may be used.

[formula 5]

$$\forall_i, (e_i|c_i) = P \tag{4}$$

[formula 6]

$$\forall_i \neq \forall_{j}, p(e_i | c_i) = q \tag{5}$$

The above formulas (4) and (5) are approximations in which, in any character "ci", a probability at which a first candidate is the characters themselves is equally "p", and a probability at which the first candidate is the other characters is equally "q". At this time, the following result is obtained.

$$p + \{n(E) - 1\}q = 1 \tag{6}$$

This approximation assumes that a character string listing the first candidates is a result of preliminary recognition. This result corresponds to matching for checking how many words such character string coincides with each word "wa". When the characters with "a" in number are coincident with each other, the following simple result is obtained.
[formula 7]

$$P(r | \hat{w}_i) = p^a q^{L-a} \tag{7}$$

3.3 Specific Example

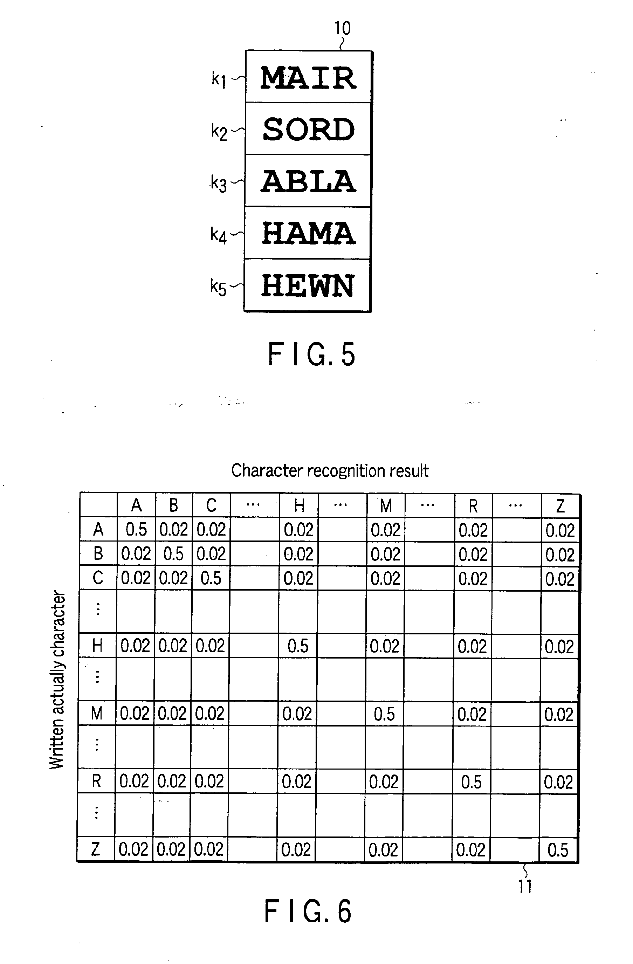

For example, consider that a city name is read in address reading of mail P written in English as shown in FIG. 2. FIG. 4 shows the delimiting processing result of a character pattern that corresponds to a portion at which it is believed that the city name identified by the above mentioned delimiting processing is written. This result shows that four characters are detected. A word dictionary 10 stores candidates of city names (words) by the number of characters. For example, a candidate of a city name (word) that consist of four characters is shown in FIG. 5. In this case, five city names each consisting of four characters are stored as MAIR (k1), SORD (k2), ABLA (k3), HAMA (k4), and HEWN (k5).

Character recognition is performed for each character pattern shown in FIG. 4 by the above described character recognition processing. A posteriori probability for each of the city names shown in FIG. 5 is calculated on the basis of the character recognition result of such each character pattern.

Although characteristics (= character recognition results) used for calculation are various, an example using characters of a first candidate is shown here. In this case, the character recognition result is "H, A, I, A" in order from the left-most character, relevant to each character pattern shown in FIG. 4. In this way, from the above formula (3), a probability P(r|k1) the probability that the character recognition result "H, A, I, A" shown in FIG. 4 will be produced when the actually written character is "MAIR (k1)",
[formula 8]

$$P(r | k_1) = P("H" | "M")P("A" | "A")P("I" | "I")P("A" | "R") \tag{8}$$

As described in subsection 3.2.1, the value of each term on the right side is obtained in advance by preparing a probability table. Alternatively, by using approximation described in subsection 3.2.2, namely, for example, when p = 0.5 and n (E) = 26, q = 0.02. Thus, the calculation result is obtained as follows.

$$P(r | k1) = q \cdot p \cdot p \cdot q = 0.0001 \tag{9}$$

That is, a probability P(r|k1) at which the city name MAIR (ki) relevant to the character recognition result "H, A, I, A" is the result of word recognition is 0.0001.

Similarly, the following results are obtained.

$$P(r|k2) = q \cdot q \cdot q \cdot q = 0.00000016$$

$$P(r|k3) = q \cdot q \cdot q \cdot p = 0.000004$$

$$P(r|k4) = p \cdot p \cdot q \cdot p = 0.0025$$

$$P(r|k5) = p \cdot q \cdot q \cdot q = 0.000004 \hspace{3cm} (10)$$

The probability P(r|K2) that the character recognition result "H, A, I, A" shown in FIG. 4 will be produced when the actually written character is "SORD (k2)", is 0.00000016.

The probability P(r|K3) that the character recognition result "H, A, I, A" shown in FIG. 4 will be produced when the actually written character is "SORD (k3)", is 0.000004.

The probability P(r|K4) that the character recognition result "H, A, I, A" shown in FIG. 4 will be produced when the actually written character is "SORD (k4)", is 0.0025.

The probability P(r|K5) that the character recognition result "H, A, I, A" shown in FIG. 4 will be produced when the actually written character is "SORD (k5)", is 0.000004.

Assuming that P(k1) to P(k5) are equal to each other, the magnitude of a posteriori probability P(ki|r) is equal to P(r|ki) from the above formula (2). Therefore, the formulas (9) and (10) may be compared with each other in magnitude. The largest probability is P(r|k4), and thus, the city name written in FIG. 2 is estimated as HAMA. A description will now be given of the probability table 11. FIG. 6 shows how the approximation described in subsection 3.2.2 is expressed in the form of a probability table. The characters are assumed to be 26 upper-case alphabetic characters. In FIG. 6, the vertical axis indicates actually written characters, while the horizontal axis represents their character recognition results. For example, the intersection between vertical line "M" and horizontal line "H" in the probability table 11 represents the probability P("H"|"M"), at which the character recognition result becomes "H" when the actually written character is "M". In the approximation described in subsection 3.2.2., the probability of each character recognition result correctly representing the actually written character is assumed to be "p". This being so, the diagonal line between the upper left corner of the probability table 11 and the lower right corner thereof is constant. In the case of FIG. 6, the probability is 0.5. Likewise, in the approximation described in subsection 3.2.2., the probability of each character recognition result representing a character other than the actually written character is assumed to be "q". This being so, the diagonal line between the upper left corner of the probability table 11 and the lower right corner thereof is constant. In the case of FIG. 6, the probability is 0.02.

As a result of using approximation described in subsection 3.2.2, a city name with its more coincident characters among city names contained in the word dictionary 10 shown in FIG. 5 and among the city names obtained by the character recognition shown in FIG. 4, is selected. Without using approximation described in subsection 3.2.2, as described in subsection 3.2.1, in the case where each P(ei|cj) is obtained in advance, and then, the obtained value is used for calculation, a city name with its more coincident characters is not always selected.

For example, a comparatively large value is in the first term of the above formula (8) because H and M is similar to each other in shape. Thus, the following result is obtained.
[formula 9]

$$P(``M"|``M") = 0.32, P(``H"|``M") = 0.2,$$

$$P(``H"|``H") = 0.32, P(``M"|``H") = 0.2,$$

Similarly, a value in the fourth term is obtained in accordance with the following formulas
[formula 10]

$$P(``R"|``R") = 0.42, P(``A"|``R") = 0.1,$$

$$P("A"|"A") = 0.42, P("R"|"A") = 0.1$$

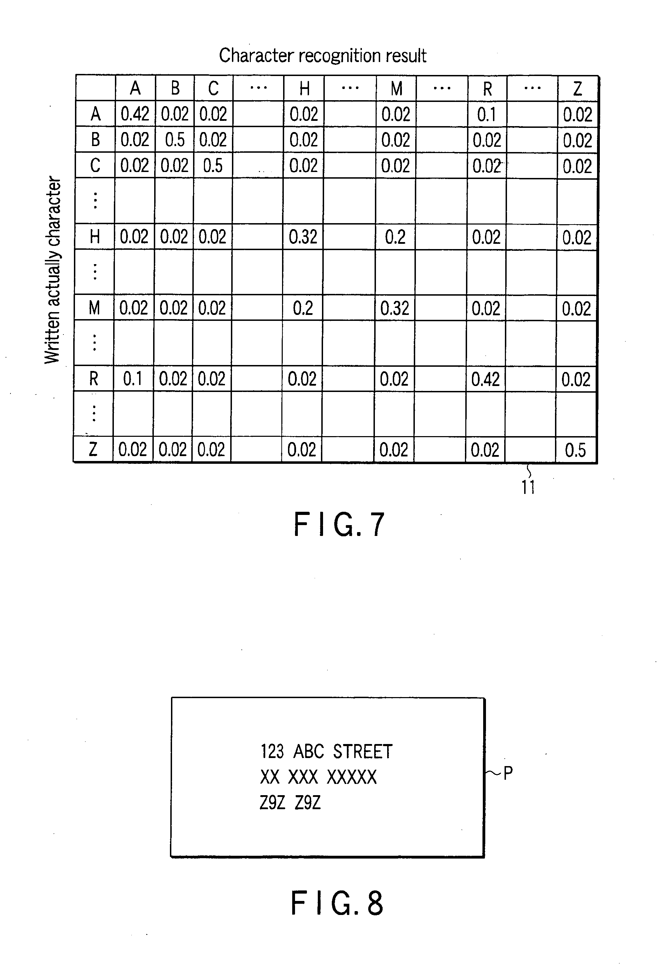

With respect to the other characters, approximation described in subsection 3.2.2 can be used. The probability table 11 in this case is shown in FIG. 7. At this time, the following result is obtained.
[formula 11]

$$P(r|k_1) = P("H"|"M") \cdot p("A"|"A") \cdot p \cdot P("A"|"R") = 0.0042$$

$$P(r|k_2) = q \cdot q \cdot q \cdot q = 0.00000016$$

$$P(r|k_3) = q \cdot q \cdot q \cdot P("A"|"A") = 0.00000336$$

$$P(r|k_4) = P("H"|"H") \cdot P("A"|"A") \cdot q \cdot P("A"|"A") \approx 0.0011$$

$$P(r|k_5) = P("H"|"H") \cdot q \cdot q \cdot q = 0.00000256$$

$$(11)$$

In this formula, $P(r|k1)$ includes the largest value, and a city name estimated to be written on a mail P shown in FIG. 2 is MAIR.

Now, a description is given to the Bayes Estimation in word recognition when the number of characters is not constant according to the first embodiment of the present invention. In this case, the Bayes Estimation is effective in Japanese or any other language in which no word break occurs. In addition, in a language in which a word break occurs, the Bays Estimation is effective in the case where a word dictionary contains a character string consisting of a plurality of words.

## 4. BAYES ESTIMATION WHEN THE NUMBER OF CHARACTERS IS NOT CONSTANT

In reality, although there is a case in which a character string of a plurality of words is contained in a category (for example, NORTH YORK), a character string of one word cannot be compared with a character string of two words in the method described in chapter 3. In addition, the number of characters is not constant in a language (such as Japanese) in which no word break occurs, the method described in chapter 3 is not used. Now, this section describes a word recognition method that corresponds to a case in which the number of characters is not always constant.

### 4.1 Definition of Formulas

An input pattern "x" is defined as a plurality of words rather than one word, and Bayes Estimation is performed in a similar manner to that described in chapter 3. In this case, the definitions in chapter 3 are added and changed as follows.
Changes:

· An input pattern "x" is defined as a plurality of words.
· L: Total number of characters in the input pattern "x"
· Category set K = {ki}

[formula 12]

$$k_i = (\hat{w}'_j, h)$$

$\hat{w}'_j \in \hat{w}', \hat{w}'$: A set of character strings having the number of characters and the number of words that can be applied to input "x"

h: A position of a character string "$\hat{w}'_j$" in the input "x". A character string "$\hat{w}'_j$" starts from (h + 1)-th character from the start of the input "x".

In the foregoing description, wb may be expressed in place of $\hat{w}'_j$.

Additions:

[formula 13]

$$\cdot \ \hat{w}'_j \ = \ (\hat{w}'_{j1}, \ \hat{w}'_{j2}, \ \ldots, \ \hat{w}'_{jL_j})$$

$L_j$: Total number of characters in character string "$\hat{w}'_j$"

$\hat{w}'_{jk}$: k-th character of $\hat{w}'_j$ $\hat{w}'_{jk} \in C$

At this time, when Bayes Estimation is used, a posteriori probability P(ki|r) is equal to that obtained by the above formula (2).

[formula 14]

$$P(k_i|r) = \frac{P(r|k_i)P(k_i)}{P(r)} \tag{12}$$

P(r|ki) is represented as follows.

[formula 15]

$$P(r|k_i) = P(r_1, r_2, \cdots, r_h|k_i)$$
$$\cdot P(r_{h+1}|\hat{w}'_{j1})P(r_{h+2}|\hat{w}'_{j2}) \cdots P(r_{h+L_j}|\hat{w}'_{jL_j})$$
$$\cdot P(r_{h+L_j+1}, r_{h+L_j+2}, \cdots, r_L|k_i)$$
$$= P(r_1, r_2, \cdots, r_h|k_i)\left\{\prod_{k=1}^{L_j} P(r_{h+k}|\hat{w}'_{jk})\right\}$$
$$\cdot P(r_{h+L_j+1}, r_{h+L_j+2}, \cdots, r_L|k_i) \tag{13}$$

Assume that P(ki) is obtained in the same way as that described in chapter 3. Note that n (K) increases more significantly than that in chapter 3, and thus, a value of P(ki) is simply smaller than that in chapter 3.

4.2 Approximation for Practical Use

4.2.1 Approximation relevant to a portion free of any character string and normalization of the number of characters

The first term of the above formula (13) is approximated as follows.

[formula 16]

$$P(r_1, r_2, \cdots, r_h|k_i) \approx P(r_1, r_2, \cdots, r_h)$$
$$\approx P(r_1)P(r_2) \cdots P(r_h) \tag{14}$$

Approximation of a first line assumes that there is ignored an effect of "wb" on a portion to which a character string "wb" of all the characters of the input pattern "x" is applied. Approximation of a second line assumes that each "rk" is independent. This is not really true. These approximation is coarse, but is very effective.

Similarly, when the third term of the above formula (13) is approximated, the formula (13) is changed as follows.

[formula 17]

$$P(r|k_i) = \prod_{k=1}^{L_j} P(r_{h+k}|\hat{w}'_{jk}) \prod_{\substack{1 \le k \le h \\ h+L_j+1 \le k \le L}} P(r_k) \qquad (15)$$

Here, assume a value of P(ki|r)/P(ki). This value indicates how a probability of "ki" increases or decreases by knowing a characteristic "r".

[formula 18]

$$\frac{P(k_i|r)}{P(k_i)} = \frac{P(r|k_i)}{P(r)}$$

$$\approx \frac{\prod_{k=1}^{L_j} P(r_{h+k}|\hat{w}'_{jk}) \prod_{\substack{1 \le k \le h \\ h+L_j+1 \le k \le L}} P(r_k)}{\prod_{k=1}^{L} P(r_k)} \qquad (16)$$

$$= \prod_{k=1}^{L_j} \frac{P(r_{h+k}|\hat{w}'_{jk})}{P(r_{h+k})}$$

Approximation using a denominator in line 2 of the formula (16) is similar to that obtained by the above formula (14).

This result is very important. At the right side of the above formula (16), there is no description concerning a portion at which the character string "wb" of all the characters is not applied. That is, the above formula (16) is not associated with what the input pattern "x" is. From this fact, it is found that P(ki|r) can be calculated by using the above formula (16) without worrying about the position and length of the character string "wb", and multiplying P(ki).

A numerator of the above formula (16) is the same as that of the above formula (3), namely, P(r|ki) when the number of characters is constant. This means that the above formula (16) performs normalization of the number of characters by using the denominator.

4.2.2 When a first candidate is used

Here, assume that characters specified as a first candidate is used as a characteristic as described in subsection 3.2.1. The following approximation of P(rk) is assumed.

[formula 19]

$$P(r_k) = \frac{1}{n(E)} \qquad (17)$$

In reality, although there is a need to consider the probability of generation of each character, this consideration is ignored here. At this time, when the above formula (16) is approximated by using the approximation described in subsection 3.2.2, the following result is obtained.
[formula 20]

$$\frac{P(k_i|r)}{P(k_i)} = p^a q^{L_j - a} n(E)^{L_j} \qquad (18)$$

where normalization is effected by $n(E)^{L_j}$.

4.2.3. Error suppression

The above formula (16) is obtained based on rough approximation and may pose the accuracy problem. In order to further improve the accuracy, therefore, formula (12) is modified as follows:
[formula 21]

$$P(k_i \mid r) = \frac{P(r \mid k_i)P(k_i)}{P(r)}$$

$$= \frac{P(r \mid k_i)P(k_i)}{\sum_t P(r \mid k_t)P(k_t)} \qquad (16-2)$$

$$\approx \frac{P(k_i)match(k_i)}{\sum_t P(k_t)match(k_t)}$$

where
[formula 22]

$$match(k_i) = \prod_{k=1}^{L_j} \frac{P(r_{h+k} \mid \hat{w}'_{jk})}{P(r_{h+k})} \qquad (16-3)$$

As a result, the approximation used for the denominator on the second line of formula (16) can be avoided and the error is suppressed.
The formula "match(ki)" is identical with the third line in formula (16). In other words, the above formula (16-2) can be calculated by calculating and substituting formula (16) for each ki.

4.3 Specific Example

For example, consider that a city name is read in mail address reading when:

· there exists a city name consisting of a plurality of words in a language (such as English) in which a work break occurs; and
· when a city name is written in a language (such as Japanese) in which no word break occurs.

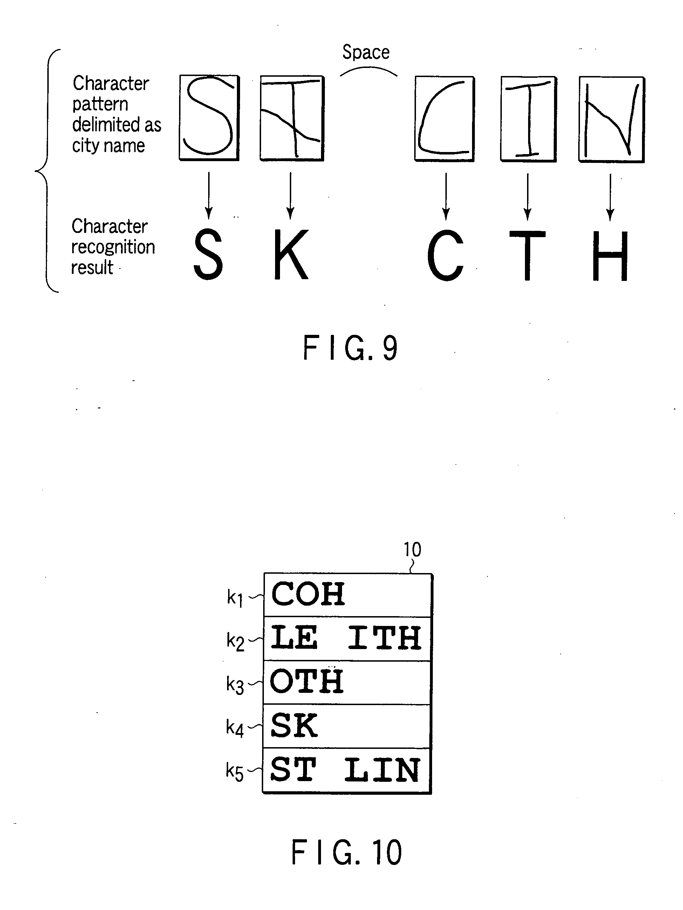

In the foregoing, the number of characters of each candidate is not constant. For example, consider that a city name is read in address reading of mail P written in English as shown in FIG. 8. FIG. 9 shows the delimiting processing result of a character pattern that corresponds to a portion at which it is believed that the city name identified by the above described delimiting processing is written, wherein it is detected that a word consisting of two characters is followed by a space, and such space is followed by a word consisting of three characters. The word dictionary 10, as shown in FIG. 10, stores all the city names having the number of characters or the number of words applied in FIG. 9. In this case, five city names are stored as COH (k1), LE ITH (k2), OTH (k3), SK (k4), and STLIN (k5).

Character recognition is performed for each character patterns shown in FIG. 9 by the above described character recognition processing. The posteriori probability is calculated by each city name shown in FIG. 10 on the basis of the character recognition result obtained by such each character pattern.

Although characteristics used for calculation (= character recognition results) are various, an example using characters specified as a first candidate is shown here. In this case, the character recognition result is S, K, C, T, H in order from the left-most character relevant to each character pattern shown in FIG. 9. When approximation described in subsection 4.2.1 is used, in accordance with the above formula (16), a posteriori probability P(ki|r). That the last three characters are "COH" when the character recognition result is "S, K, C, T, H".

[formula 23]

$$\frac{P(k_1|r)}{P(k_1)} \approx \frac{P("C"|"C")}{P("C")} \frac{P("T"|"O")}{P("T")} \frac{P("H"|"H")}{P("H")} \qquad (19)$$

Further, in the case where approximation described in subsections 3.2.2 and 4.2.2 is used, when p = 0.5 and n (E) = 26, q = 0.02. Thus, the following result is obtained.

[formula 24]

$$\frac{P(k_1|r)}{P(k_1)} \approx p \cdot q \cdot p \cdot n(E)^3 = 87.88 \qquad (20)$$

Similarly, the following result is obtained.

[formula 25]

$$\frac{P(k_2|r)}{P(k_2)} \approx q \cdot q \cdot q \cdot p \cdot p \cdot n(E)^5 \approx 23.76$$

$$\frac{P(k_3|r)}{P(k_3)} \approx q \cdot p \cdot p \cdot n(E)^3 = 87.88$$

$$(21)$$

$$\frac{P(k_4|r)}{P(k_4)} \approx p \cdot p \cdot n(E)^2 = 169$$

$$\frac{P(k_5|r)}{P(k_5)} \approx p \cdot q \cdot q \cdot q \cdot q \cdot n(E)^5 \approx 0.95$$

In the above formula, "k3" assumes that the right three characters are OTH, and "k4" assumes that the left two characters are SK.

Assuming that P(ki) to P(k5) are equal to each other, with respect to the magnitude of the posteriori probability P(ki|r), the above formula (21) and formula (22) may be compared with each other in magnitude. The highest probability is P(k|r), and thus, the city name written in FIG. 8 is estimated as SK.

Without using approximation described in subsection 3.2.2, as described in subsection 3.2.1, there is shown an example when each P(ei|cj) is obtained in advance, and then, the obtained value is used for calculation.

Because the shapes of C and L, T and I, and H and N are similar to each other, it is assumed that the following result is obtained.

[formula 26]

$$P("C"|"C") = P("L"|"L") = P("T"|"T") = P("I"|"I")$$

$$= P("H"|"H") = P("N"|"N") = 0.4$$

$$P("C"|"L") = P("L"|"C") = P("T"|"I") = P("I"|"T")$$

$$= P("N"|"H") = P("H"|"N") = 0.12$$

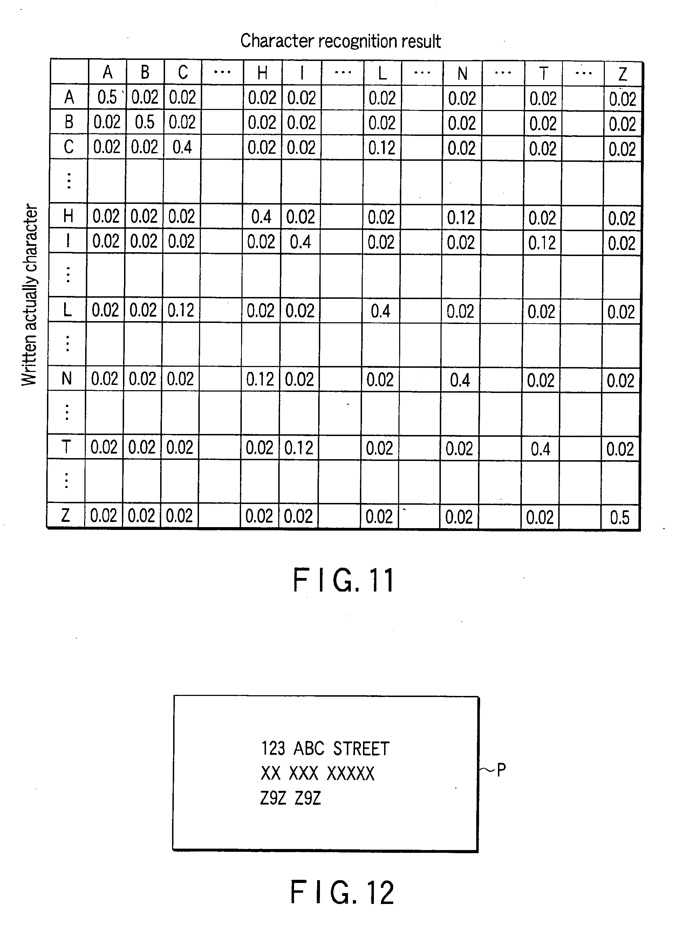

Approximation described in subsection 3.2.2 is met with respect to the other characters. The probability table 11 in this case is shown in FIG. 11. At this time, the following result is obtained.
[formula 27]

$$\frac{P(k_1|r)}{P(k_1)} \approx P("C"|"C") \cdot q \cdot P("H"|"H") \cdot n(E)^3 \approx 56.24$$

$$\frac{P(k_2|r)}{P(k_2)} \approx q \cdot q \cdot q \cdot P("T"|"T") \cdot P("H"|"H") \cdot n(E)^5 \approx 15.21$$

$$\frac{P(k_3|r)}{P(k_3)} \approx q \cdot P("T"|"T") \cdot P("H"|"H") \cdot n(E)^3 \approx 56.24$$

$$\frac{P(k_4|r)}{P(k_4)} \approx p \cdot p \cdot n(E)^2 = 169$$

$$\frac{P(k_5|r)}{P(k_5)} \approx p \cdot q \cdot P("C"|"L") \cdot P("T"|"I")$$

$$\cdot P("H"|"N") \cdot n(E)^5 \approx 205.3$$

$$(22)$$

In this formula, P(k5|r)/P(k5) includes the largest value, and the city name estimated to be written in FIG. 8 is ST LIN.
Also, an example of the calculation for error suppression described in subsection 4.2.3 will be explained below. First, formula (16-2) is calculated. Assuming that P(k1) to P(k5) are equal to one another, they are reduced in advance. The denominator is the total sum of formula (22), i.e. $56.24 + 15.21 + 56.24 + 169 + 205.3 \approx 502$. The numerator is each result of formula (22). Thus,
[formula 28]

$$P(k_1 \mid r) \approx \frac{56.24}{502} \approx 0.11$$

$$P(k_2 \mid r) \approx \frac{15.21}{502} \approx 0.030$$

$$P(k_3 \mid r) \approx \frac{56.24}{502} \approx 0.11 \qquad\qquad (22-2)$$

$$P(k_4 \mid r) \approx \frac{169}{502} \approx 0.34$$

$$P(k_5 \mid r) \approx \frac{205.3}{502} \approx 0.41$$

Assuming the rejection for the probability of 0.5 or less, the recognition result is rejected.

In this way, in the first embodiment, recognition processing is performed by each character for an input character string that corresponds to a word to be recognized; there is obtained a probability of the generation of characteristics obtained as the result of character recognition by conditioning characters of the words contained in a word dictionary that stores in advance candidates of words to be recognized; the thus obtained probability is divided by a probability of the generation of characteristics obtained as the result of character recognition; each of the above division results obtained for the characters of the words contained in the word dictionary is divided for all the characters; all the computation results obtained for each word in the word dictionary are added up; the computation results obtained on each character of each word in the word dictionary are divided by the above added-up computation results; and based on this result, the word recognition result is obtained.

That is, in word recognition using the character recognition result, even in the case where the number of characters in a word is not constant, word recognition can be performed precisely by using an evaluation function based on a posteriori probability that can be used even in the case where the number of characters in a word is not always constant.

Also, the rejection process can be executed with high accuracy.

Now, a description will be given to Bayes Estimation according to a second embodiment of the present invention, the Bayes Estimation being **characterized in that**, when word delimiting is ambiguous, such ambiguity is included in calculation of the posteriori probability. In this case, the Bayes Estimation is effective when error detection of word break cannot be ignored.

5. INTEGRATION OF WORD DELIMITING

In a language (such as English) in which a word break occurs, the methods described in the foregoing chapters 1 to 4 assume that a word is always identified correctly. If the number of characters is changed while this assumption is not met, these methods cannot be used. In this chapter, the result of word delimiting is treated as a probability without being defined as absoluteness, whereby the ambiguity of word delimiting is integrated with the Bayes Estimation in word recognition. A primary difference from chapter 4 is that consideration is taken into characteristics between characters obtained as the result of word delimiting.

5.1 Definition of Formulas

This section assumes that character delimiting is completely successful, and no noise entry occurs. The definitions in chapter 4 are added and changed as follows.
Changes

    · An input pattern "x" is defined as a line.
    · L: Total number of characters in the input line "x"
    · Category set K = {ki}

[formula 29]

ki = ($\widetilde{w}_j$, h), $\widetilde{w}_j \in \widetilde{W}$, $\widetilde{W}$ : A set of all candidates of character strings (The number of characteristics is not limited.)
h: A position of a character string **"$\widetilde{w}_j$"** in an input line "x". A character string $\widetilde{w}_j$ starts from (h + 1)-th character from the start of an input pattern "x".

In the foregoing description, "wc" may be expressed in place of **"$\widetilde{w}_j$"**.

Additions

[formula 30]

$$\cdot \ \widetilde{w}_j = (\widetilde{w}_{j1}, \ \widetilde{w}_{j2}, \ ..., \ \widetilde{w}_{jL_j}, \ \widetilde{w}'_{j0}, \ \widetilde{w}'_{j1}, \ \widetilde{w}'_{j2}, \ ..., \ \widetilde{w}'_{jL_j-1}, \ \widetilde{w}'_{jL_j})$$

$L_j$: Number of characters in character string **"$\widetilde{w}_j$"**
$\widetilde{w}_{jk}$: k-th character **"$\widetilde{w}_{jk} \in C$"** of character string **"$\widetilde{w}_j$"**
$\widetilde{w}'_{jk}$ : Whether or not a word break occurs k-th character and (k + 1)-th character of character string **"$\widetilde{w}_j$"**

$$\widetilde{w}'_{jk} \ \in \ S, \ S = \{s_0, \ s_1(, \ s_2)\}$$

$s_0$: Break
$s_1$: No break
($s_2$: Start or end of line)
$\widetilde{w}'_{j0} : \widetilde{w}'_{jL_j} = s_0$
($s_2$ is provided for representing the start or end of line in the same format, and is not essential.)
Change

$\cdot$ Characteristic "r" = (rc, rs)

rc: Character characteristics, and rs:
Characteristics of character spacing
Addition
[formula 31]
$\cdot$ Character characteristics $r_C = (r_{C1}, r_{C2}, r_{C3}, ..., r_{CL})$
$r_{Ci}$: Character characteristics of i-th character (= character recognition result)
(Example: First candidate; first to third candidates; candidate having predetermined similarity, and first and second candidates and their similarity and the like)
$\cdot$ Character spacing characteristics $r_S = (r_{S0}, r_{S1}, r_{S2}, ..., r_{SL})$
$r_{Si}$: Characteristics of character spacing between i-th character and (i+1)-th character

At this time, the posteriori probability P(ki|r) can be represented by the following formula.
[formula 32]

$$P(k_i|r) = P(k_i|r_C, r_S)$$
$$= \frac{P(r_C, r_S|k_i)P(k_i)}{P(r_C, r_S)}$$
$$= \frac{P(r_C|r_S, k_i)P(r_S|k_i)P(k_i)}{P(r_C, r_S)} \qquad (23)$$

In this formula, assuming that P(rs|ki) and P(rc|ki) are independent of each other (this means that character characteristics extraction and characteristics of character spacing extraction are independent of each other), P(rc|rs, ki) = P(rc|ki). Thus, the above formula (23) is changed as follows.
[formula 33]

$$P(k_i|r) = \frac{P(r_C|k_i)P(r_S|k_i)P(k_i)}{P(r_C, r_S)} \qquad (24)$$

P(rc|ki) is substantially similar to that obtained by the above formula (13).
[formula 34]

$$P(r_C|k_i) = P(r_{C1}, r_{C2}, \cdots, r_{Ch}|k_i)$$

$$\cdot P(r_{Ch+1}|\tilde{w}_{j1})P(r_{Ch+2}|\tilde{w}_{j2})\cdots P(r_{Ch+L_j}|\tilde{w}_{jL_j})$$

$$\cdot P(r_{Ch+L_j+1}, \cdots, r_{CL}|k_i)$$

$$= P(r_{C1}, r_{C2}, \cdots, r_{Ch}|k_i)\left\{\prod_{k=1}^{L_j} P(r_{Ch+k}|\tilde{w}_{jk})\right\}$$

$$\cdot P(r_{Ch+L_j+1}, \cdots, r_{CL}|k_i)$$

$$\qquad (25)$$

P(rs|ki) is represented as follows.
[formula 35]

$$P(r_S|k_i) = P(r_{S1}, r_{S2}, \cdots, r_{Sh-1}|k_i)$$

$$\cdot P(r_{Sh}|\tilde{w}'_{j0})P(r_{Sh+1}|\tilde{w}'_{j1})\cdots P(r_{Sh+L_j}|\tilde{w}'_{jL_j})$$

$$\cdot P(r_{Sh+L_j+1}, \cdots, r_{Sh-1}|k_i)$$

$$= P(r_{S1}, r_{S2}, \cdots, r_{Sh-1}|k_i)\left\{\prod_{k=0}^{L_j} P(r_{Sh+k}|\tilde{w}'_{jk})\right\}$$

$$\cdot P(r_{Sh+L_j+1}, \cdots, r_{SL-1}|k_i)$$

$$\qquad (26)$$

Assume that P(ki) is obtained in a manner similar to that described in chapters 1 to 4. However, in general, note that n (K) increases more significantly than that described in chapter 4.

5.2 Approximation for Practical Use

5.2.1 Approximation relevant to a portion free of a character string and normalization of the number of characters

When approximation similar to that described in subsection 4.2.1 is used, the following result is obtained.
[formula 36]

$$P(r_C|k_i) = \prod_{k=1}^{L_j} P(r_{Ch+k}|\tilde{w}_{jk}) \prod_{\substack{1 \le k \le h \\ h+L_j+1 \le k \le L}} P(r_{Ck}) \tag{27}$$

Similarly, the above formula (26) is approximated as follows.
[formula 37]

$$P(r_S|k_i) = \prod_{k=0}^{L_j} P(r_{Sh+k}|\tilde{w}'_{jk}) \prod_{\substack{1 \le k \le h-1 \\ h+L_j+1 \le k \le L-1}} P(r_{Sk}) \tag{28}$$

When a value of P(ki|r)/P(ki) is considered in a manner similar to that described in subsection 4.2.1, the formula is changed as follows.
[formula 38]

$$\begin{aligned}
\frac{P(k_i|r)}{P(k_i)} &= \frac{P(r_C|k_i)P(r_S|k_i)}{P(r_C, r_S)} \\
&\approx \frac{P(r_C|k_i)}{P(r_C)} \frac{P(r_S|k_i)}{P(r_S)} \\
&= \frac{P(k_i|r_C)}{P(k_i)} \frac{P(k_i|r_S)}{P(k_i)}
\end{aligned} \tag{29}$$

A first line of the above formula (29) is in accordance with the above formula (24). A second line uses approximation obtained by the following formula.
[formula 39]

$$P(r_C, r_S) \approx P(r_C)P(r_S)$$

The above formula (29) shows that a "change caused by knowing 'characteristics' of a probability of 'ki'" can be handled independently according to rc and rs. The probability is calculated below.
[formula 40]

$$\frac{P(k_i|r_C)}{P(k_i)} = \frac{P(r_C|k_i)}{P(r_C)}$$

$$\approx \frac{\displaystyle\prod_{k=1}^{L_j} P(r_{Ch+k}|\tilde{w}_{jk}) \quad \prod_{\substack{1\leq k\leq h \\ h+L_j+1\leq k\leq L}} P(r_{Ck})}{\displaystyle\prod_{k=1}^{L} P(r_{Ck})} \tag{30}$$

$$= \prod_{k=1}^{L_j} \frac{P(r_{Ch+k}|\tilde{w}_{jk})}{P(r_{Ch+k})}$$

[formula 41]

$$\frac{P(k_i|r_S)}{P(k_i)} = \frac{P(r_S|k_i)}{P(r_S)}$$

$$\approx \frac{\displaystyle\prod_{k=0}^{L_j} P(r_{Sh+k}|\tilde{w}'_{jk}) \quad \prod_{\substack{1\leq k\leq h-1 \\ h+L_j+1\leq k\leq L-1}} P(r_{Sk})}{\displaystyle\prod_{k=1}^{L-1} P(r_{Sk})} \tag{31}$$

$$= \prod_{k=0}^{L_j} \frac{P(r_{Sh+k}|\tilde{w}'_{jk})}{P(r_{Sh+k})}$$

Approximation used by a denominator in the second line of each of the above formulas (30) and (31) is similar to that obtained by the above formula (14). In the third line of the formula (31), rs0 and rsL are always at the start and end of the line (d3 shown in an example of the next subsection 5.2.2),

$$P(rs0) = P(rsL) = 1.$$

From the foregoing, the following result is obtained.
[formula 42]

$$\frac{P(k_i|r)}{P(k_i)} = \prod_{k=1}^{L_j} \frac{P(r_{Ch+k}|\tilde{w}_{jk})}{P(r_{Ch+k})} \prod_{k=0}^{L_j} \frac{P(r_{Sh+k}|\tilde{w}'_{jk})}{P(r_{Sh+k})} \tag{32}$$

As in the above formula (16), in the above formula (32) as well, there is no description concerning a portion to which a character string "wc" is not applied. That is, in this case as well, "normalization caused by a denominator" can be considered.

5.2.2 Example of characteristics of character spacing "rs"

An example of characteristics are defined as follows.
· Characteristics of character spacing set
D = {d0, d1, d2, (, d3) }
d0: Expanded character spacing
d1: Condensed character spacing
d2: No character spacing
(d3: This denotes the start or end of the line, and always denotes a word break.)
· rs ∈ D
At this time, the following result is obtained.
[formula 43]

$$P(d_k|s_1)_{k=0,1,2 \ 1=0,1}$$

The above formula is established in advance, whereby the numerator in the second term of the above formula (32) can be obtained by the formula below.
[formula 44]

$$P(r_{Sh+k}|\tilde{\tilde{w}}'_{jk})$$

where P(d3|s2) = 1.
In addition, the formula set forth below is established in advance, whereby the denominator P(rsk) in the second term of the above formula (32) can be obtained.
[formula 45]

$$P(d_k)_{k=0,1,2}$$

5.2.3. Error suppression

The above formula (32) is obtained based on a rough approximation and may pose the accuracy problem. In order to further improve the accuracy, therefore, formula (23) is modified as follows:
[formula 46]

$$P(k_i \mid r) = \frac{P(r_C, r_S \mid k_i)P(k_i)}{P(r_C, r_S)}$$

$$= \frac{P(r_C, r_S \mid k_i)P(k_i)}{\sum_t P(r_C, r_S \mid k_t)P(k_t)} \qquad (23-2)$$

$$\approx \frac{P(k_i)matchB(k_i)}{\sum_t P(k_t)matchB(k_t)}$$

where
[formula 47]

$$\text{matchB}(k_i) = \prod_{k=1}^{L_j} \frac{P(r_{Ch+k} \mid \tilde{w}_{jk})}{P(r_{Ch+k})} \prod_{k=0}^{L_j} \frac{P(r_{Sh+k} \mid \tilde{w}'_{jk})}{P(r_{Sh+k})}$$

$$(23-3)$$

As a result, the approximation used for the denominator on the second line of formula (30) and the denominator on the second line of formula (31) can be avoided and the error is suppressed.

The formula "matchB(ki)" is identical with formula (32). In other words, formula (23-2) can be calculated by calculating and substituting formula (32) for each ki.

5.3 Specific Example

As in section 4.3, consider that a city name is read in address reading of a mail in English.

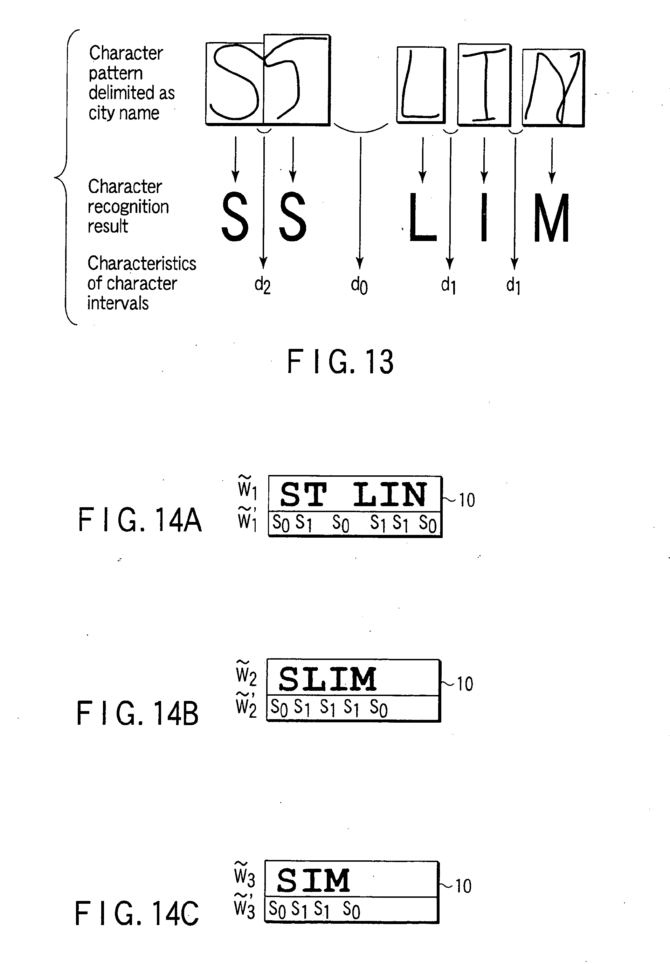

For example, consider that a city name is read in address reading of mail P written in English, as shown in FIG. 12. FIG. 13 shows the delimiting processing of a character pattern that corresponds to a portion at which it is believed that the city name identified by the above described delimiting processing is written, wherein a total of five characters are detected. It is detected that the first and second characters are free of being spaced from each other; the second and third characters are expanded in spacing; and the third and fourth characters and the fourth and fifth characters are condensed in spacing. FIG. 14A, FIG. 14B, and FIG. 14C show the contents of the word directory 10, wherein all city names are stored. In this case, three city names are stored as ST LIN shown in FIG. 14A, SLIM shown in FIG. 14B, and SIM shown in FIG. 14C. The sign (s0, s1) described under each city name denotes whether or not a word break occurs. s0 denotes a word break, and s1 denotes no word break.

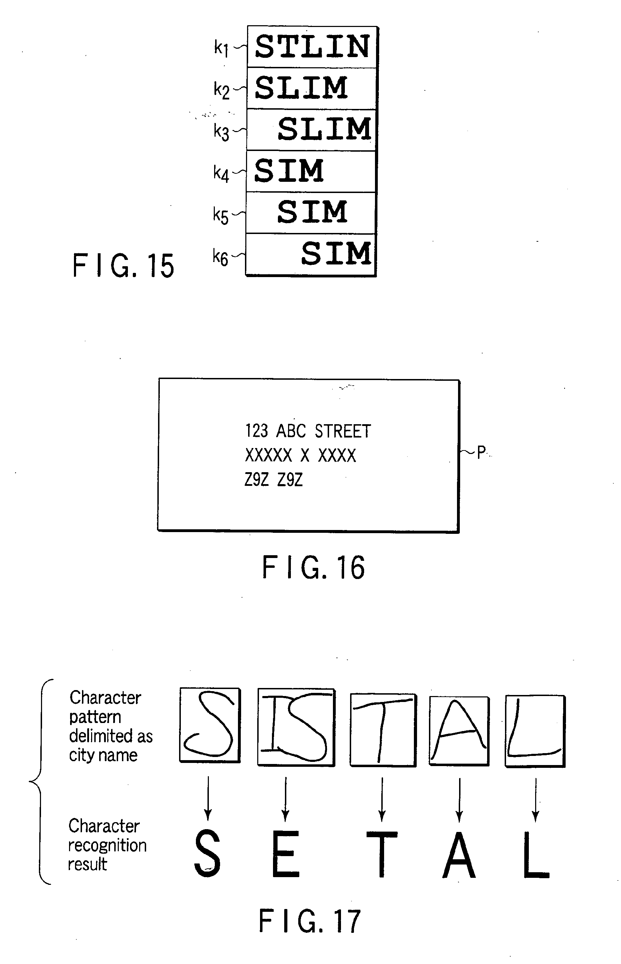

FIG. 15 illustrates a set of categories. Each category includes position information, and thus, is different from the word dictionary 10. A category k1 is made of a word shown in FIG. 14A; categories k2 and k3 are made of words shown in FIG. 14B; and categories k4, k5, and k6 are made of words shown in FIG. 14C. Specifically, the category 1 is made of "STLIN"; the category 2 is made of "SLIM"; the category 3 is made of " SLIM"; the category k4 is made of "SLIM "; the category k5 is made of " SIM "; and the category k6 is made of " SLIM".

Character recognition is performed for each character pattern shown in FIG. 13 by the above described character recognition processing. The character recognition result is used for calculating the posteriori probability of each of the categories shown in FIG. 15. Although characteristics used for calculation (= character recognition result) are various, an example using characters specified as a first candidate is shown here.

In this case, the five characters "S, S, L, I, M" from the start (leftmost character) are obtained as character recognition results for each of the character patterns shown in FIG. 13.

Although a variety of characteristics of character spacing are considered, an example described in subsection 5.2.2 is shown here. FIG. 13 shows characteristics of character spacing. The first and second characters are free of being spaced from each other, and thus, the characteristics of character spacing are defined as "d2". The second and third characters are expanded in spacing, and thus, the characteristics of character spacing are defined as "d0". The third and fourth characters and the fourth and fifth characters are condensed in spacing, the characteristics of character spacing are defined as "d1".

When approximation described in subsection 5.2.1 is used, in accordance with the above formula (30), a change P(kl|rc)/P(k1) in a probability of generating a category k1, the change caused by knowing the character recognition result "S, S, L, I, M", is obtained by the following formula.

[formula 48]

$$\frac{P(k_1 \mid r_C)}{P(k_1)} \approx \frac{P(\text{"S"} \mid \text{"S"})}{P(\text{"S"})} \frac{P(\text{"S"} \mid \text{"T"})}{P(\text{"S"})}$$

$$\cdot \frac{P(\text{"L"} \mid \text{"L"})}{P(\text{"L"})} \frac{P(\text{"I"} \mid \text{"I"})}{P(\text{"I"})} \frac{P(\text{"M"} \mid \text{"N"})}{P(\text{"M"})}$$

$$(33)$$

In accordance with the above formula (31), P(k1|rs)/P(k1) of the probability of an occurrence of category k1, a change caused by characteristics of character spacing shown in FIG. 14, is obtained by the following formula.
[formula 49]

$$\frac{P(k_1|r_S)}{P(k_1)} \approx \frac{P(d_2|s_1)}{P(d_2)} \frac{P(d_0|s_0)}{P(d_0)} \frac{P(d_1|s_1)}{P(d_1)} \frac{P(d_1|s_1)}{P(d_1)} \tag{34}$$

If approximation described in subsections 3.2.2 and 4.2.2 is used to make calculation in accordance with the above formula (33), for example, when p = 0.5 and n (E) = 26, q = 0.02. The above formula (33) is computed as follows.
[formula 50]

$$\frac{P(k_1|r_C)}{P(k_1)} \approx p \cdot q \cdot p \cdot p \cdot q \cdot n(E)^5 \approx 594 \tag{35}$$

In order to make communication in accordance with the above formula (34), it is required to obtain the following formula in advance.
[formula 51]

$$P(d_k|s_1)_{k=0,1,2 \ 1=0,1} \text{ and } P(d_k)_{k=0,1,2}$$

As an example, it is assumed that the following values in tables 1 and 2 are obtained.
[Table 1]

Table 1
Values of $P(d_k, s_1)$

| | | 0: Expanded ($d_0$) | 1: Condensed ($d_1$) | 2: No character spacing ($d_2$) | Total |
|---|---|---|---|---|---|
| 0: Word break ($s_0$) | | $P(d_0, s_0)$ 0.16 | $P(d_1, s_0)$ 0.03 | $P(d_2, s_0)$ 0.01 | $P(s_0)$ 0.2 |
| 1: No word break ($s_1$) | | $P(d_0, s_1)$ 0.04 | $P(d_1, s_1)$ 0.40 | $P(d_2, s_1)$ 0.36 | $P(s_1)$ 0.8 |
| Total | | $P(d_0)$ 0.20 | $P(d_1)$ 0.43 | $P(d_2)$ 0.37 | 1 |

[Table 2]

Table 2
Values of $P(d_k|s_1)$

| | k<br>l | 0: Expanded<br>$(d_0)$ | 1: Condensed<br>$(d_1)$ | 2: No character<br>spacing $(d_2)$ |
|---|---|---|---|---|
| 0: Word<br>break $(s_0)$ | | $P(d_0|s_0)$<br>0.8 | $P(d_1|s_0)$<br>0.15 | $P(d_2|s_0)$<br>0.05 |
| 1: No word<br>break $(s_1)$ | | $P(d_0|s_1)$<br>0.05 | $P(d_1|s_1)$<br>0.50 | $P(d_2|s_1)$<br>0.45 |

Table 1 lists values obtained by the following formula.
[formula 52]

$$P(d_k \cap s_1)$$

Table 2 lists the values of P(dk|s1). In this case, note that a relationship expressed by the following formula is met.
[formula 53]

$$P(d_k \cap s_1) = P(d_k|s_1)p(s_1)$$

In reality, P(dk|s1)/P(dk) is required for calculation using the above formula (34), and thus, the calculations are shown in table 3 below.
[Table 3]

Table 3
Values of $P(d_k|s_1)/P(d_k)$

| | k<br>l | 0: Expanded<br>$(d_0)$ | 1: Condensed<br>$(d_1)$ | 2: No character<br>spacing $(d_2)$ |
|---|---|---|---|---|
| 0: Word<br>break $(s_0)$ | | $P(d_0|s_0)$<br>4 | $P(d_1|s_0)$<br>0.35 | $P(d_2|s_0)$<br>0.14 |
| 1: No word<br>break $(s_1)$ | | $P(d_0|s_1)$<br>0.25 | $P(d_1|s_1)$<br>1.16 | $P(d_2|s_1)$<br>1.22 |

The above formula (34) is used for calculation as follows based on the values shown in table 3 above.
[formula 54]

$$\frac{P(k_1|r_s)}{P(k_1)} \approx 1.22 \cdot 4 \cdot 1.16 \cdot 1.16 \approx 6.57 \qquad (36)$$

From the above formula (29), a change P(k1|r)/P(k1) in a probability of generating the category k1, the change caused by knowing the characteristics recognition result "S, S, L, I, M" and the characteristics of character spacing is represented by a product between the above formulas (35) and (36), and is obtained by formula.
[formula 55]

$$\frac{P(k_1|r)}{P(k_1)} \approx 594 \cdot 6.57 \approx 3900 \tag{37}$$

Similarly, P(ki|rc)/P(ki), P(ki|rs)/P(ki), P(ki|r)/P(ki) are obtained with respect to k2 to k6 as follows.
[formula 56]

$$\frac{P(k_2|r_C)}{P(k_2)} \approx p \cdot q \cdot q \cdot q \cdot n(E)^4 \approx 1.83$$

$$\frac{P(k_3|r_C)}{P(k_3)} \approx p \cdot p \cdot p \cdot p \cdot n(E)^4 \approx 28600$$

$$\frac{P(k_4|r_C)}{P(k_4)} \approx p \cdot q \cdot q \cdot n(E)^3 \approx 3.52 \tag{38}$$

$$\frac{P(k_5|r_C)}{P(k_5)} \approx p \cdot q \cdot q \cdot n(E)^3 \approx 3.52$$

$$\frac{P(k_6|r_C)}{P(k_6)} \approx q \cdot p \cdot p \cdot n(E)^3 \approx 87.9$$

[formula 57]

$$\frac{P(k_2|r_S)}{P(k_2)} \approx 1.22 \cdot 0.25 \cdot 1.16 \cdot 0.35 \approx 0.124$$

$$\frac{P(k_3|r_S)}{P(k_3)} \approx 0.14 \cdot 0.25 \cdot 1.16 \cdot 1.16 \approx 0.0471$$

$$\frac{P(k_4|r_S)}{P(k_4)} \approx 1.22 \cdot 0.25 \cdot 0.35 \approx 0.107 \tag{39}$$

$$\frac{P(k_5|r_S)}{P(k_5)} \approx 0.14 \cdot 0.25 \cdot 1.16 \cdot 0.35 \approx 0.0142$$

$$\frac{P(k_6|r_S)}{P(k_6)} \approx 4 \cdot 1.16 \cdot 1.16 \approx 5.38$$

[formula 58]

$$\frac{P(k_2|r)}{P(k_2)} \approx 1.83 \cdot 0.124 \approx 0.227$$

$$\frac{P(k_3|r)}{P(k_3)} \approx 28600 \cdot 0.0471 \approx 1350$$

$$\frac{P(k_4|r)}{P(k_4)} \approx 3.52 \cdot 0.107 \approx 0.377 \qquad (40)$$

$$\frac{P(k_5|r)}{P(k_5)} \approx 3.52 \cdot 0.0142 \approx 0.0500$$

$$\frac{P(k_6|r)}{P(k_6)} \approx 87.9 \cdot 5.38 \approx 473$$

The maximum category in the above formulas (37) and (40) is "k1". Therefore, the estimation result is ST LIN.

In the method described in chapter 4, which does not use characteristics of character spacing, although the category "k3" that is maximum in the formulas (35) and (38) is the estimation result, it is found that the category "k1" believed to comprehensively match best is selected by integrating the characteristics of character spacing.

Also, an example of the calculation for error suppression described in subsection 5.2.3 will be explained. The above formula (23-2) is calculated. Assuming that P(k1) to P(k6) are equal to one another, they are reduced in advance. The denominator is the total sum of formula (40), i.e. $3900 + 0.227 + 1350 + 0.337 + 0.0500 + 473 \approx 5720$. The numerator is each result of formula (40). Thus,

[formula 59]

$$P(k_1 \mid r) \approx \frac{3900}{5720} \approx 0.68$$

$$P(k_2 \mid r) \approx \frac{0.227}{5720} \approx 4.0 \times 10^{-5}$$

$$P(k_3 \mid r) \approx \frac{1350}{5720} \approx 0.24$$

$$\qquad (40-2)$$

$$P(k_4 \mid r) \approx \frac{0.337}{5720} \approx 5.9 \times 10^{-5}$$

$$P(k_5 \mid r) \approx \frac{0.0500}{5720} \approx 8.7 \times 10^{-6}$$

$$P(k_6 \mid r) \approx \frac{473}{5720} \approx 0.083$$

Assuming the rejection for the probability of 0.7 or less, the recognition result is rejected.

In this manner, in the second embodiment, the input character string corresponding to a word to be recognized is identified by each character; the characteristics of character spacing are extracted by this character delimiting; recognition processing is performed for each character obtained by the above character delimiting; and a probability at which there appears characteristics obtained as the result of character recognition by conditioning characteristics of the characters and character spacing of the words contained in a word dictionary that stores candidates of the characteristics of a word to be recognized and character spacing of the word. In addition, the thus obtained probability is divided by a probability at which there appears characteristics obtained as the result of character recognition; each of the above calculation results obtained for each of the characteristics of the characters and character spacing of the words contained in the word dictionary is multiplied relevant to all the characters and character spacing; all the computation results obtained for each word in the word dictionary are added up; the computation results obtained on each character of each word in the word dictionary are divided by the above added-up computation results; and based on this result, the word recognition result is obtained.

That is, in word recognition using the character recognition result, an evaluation function is used based on a posteriori probability considering at least the ambiguity of word delimiting. In this way, even in the case where word delimiting is not reliable, word recognition can be performed precisely.

Also, the rejection process can be executed with high accuracy.

Now, a description will be given to Bayes Estimation according to a third embodiment of the present invention when no character spacing is provided or noise entry occurs. In this case, the Bayes Estimation is effective when no character spacing is provided or when noise entry cannot be ignored.


6. INTEGRATION OF THE ABSENCE OF CHARACTER SPACING AND NOISE ENTRY

The methods described in the foregoing chapters 1 to 5 assume that character is always identified correctly. If no character spacing is provided while this assumption is not met, the above methods cannot be used. In addition, these methods cannot be used to counteract noise entry. In this chapter, the Bayes Estimation that counteracts the absence of character spacing or noise entry is performed by changing categories.


6.1 Definition of Formulas

Definitions are added and changed as follows based on the definitions in chapter 5.
Changes
· Category $K = \{ki\}$
[formula 60]
$k_i = (w_{jk}, h)$, $w_{jk} \in w$, w: A set of derivative character strings
In the foregoing description, "wd" may be expressed in place of "$w_{jk}$".
Addition
[formula 61]
· Derivative character string
$w_{jk} = (w_{jk1}, w_{jk2}, ..., w_{jkL_{jk}}, w'_{jk0},$
$w'_{jk1}, ..., w'_{jkL_{jk}})$
$L_{jk}$: Number of characters in derivative character string "$w_{jk}$"
$w_{jk1}$: l-th character $w_{jk} \in C$ of $w_{jk}$
$w'_{jk}$: Whether or not a word break occurs between l character and (l + 1)-th character $w'_{jkl} \in S$,
$w'_{jk0} = w'_{jkL_{jk}} = s_0$
· Relationship between derivative character string $w_{jk}$ and character string $\tilde{w}_j$.
Assume that action $a_{jkl} \in A$ is acted between l-th character and (l + 1) character in character string $\tilde{w}_j$, whereby a derivative character string $w_{jk}$ can be formed.
$A = \{a_0, a_1, a_2\}$ $a_0$: No action $a_1$: No character spacing $a_2$: Noise entry
· a0: No action
Nothing is done for the character spacing.
· a1: No character spacing
The spacing between the two characters is not provided. The two characters are converted into one non-character by this action.
Example: The spacing between T and A of ONTARIO is not provided. ON#RIO (# denotes a non-character by providing no character spacing.)
· a2: Noise entry
A noise (non-character) is entered between the two characters.
Example: A noise is entered between N and T of ONT.
ON*T (* denotes a non-character due to noise.)
However, when 1 = 0, Lj, it is assumed that noises are generated at the left and right ends of a character spring "wc", respectively. In addition, this definition assumes that noise does not enter two or more characters continuously.
· Non-character $\gamma \in C$
A non-character is identified as "$\gamma$" by considering the absence of character spacing or noise entry, and is included in character C.
At this time, a posteriori probability $P(ki|r)$ is similar to that obtained by the above formulas (23) and (24).

[formula 62]

$$P(k_i|r) = \frac{P(r_C|k_i)P(r_S|k_i)P(k_i)}{P(r_C, r_S)} \qquad (41)$$

P(pc|ki) is substantially similar to that obtained by the above formula (25).

[formula 63]

$$P(r_C|k_i) = P(r_{C1}, r_{C2}, \cdots, r_{Ch}|k_i)\left\{\prod_{l=1}^{L_{jk}} P(r_{Ch+1}|w_{jkl})\right\}$$
$$\cdot P(r_{Ch+L_{jk}+1}, \cdots, r_{CL}|k_i) \qquad\qquad (42)$$

P(ps|ki) is also substantially similar to that obtained by the above formula (26).

[formula 64]

$$P(r_S|k_i) = P(r_{S1}, r_{S2}, \cdots, r_{Sh-1}|k_i)\left\{\prod_{l=0}^{L_{jk}} P(r_{Sh+1}|w'_{jkl})\right\}$$
$$\cdot P(r_{Sh+L_{jk}+1}, \cdots, r_{SL-1}|k_i) \qquad\qquad (43)$$

6.2 Description of P(ki)

Assume that P(wc) is obtained in advance. Here, although P(wc) is affected by the position in a letter or the position in line if the address of the mail P is actually read, for example, the P(wc) is assumed to be assigned as an expected value thereof. At this time, a relationship between P(wd) and P(wc) is considered as follows.

[formula 65]

$$P(w_{jk}) = P(\tilde{w}_j)\left\{\prod_{l=1}^{L_j-1} P(a_{jkl})\right\}P(a_{jk0})P(a_{jkL_j}) \qquad (44)$$

That is, the absence of character spacing and noise entry can be integrated with each other in a frame of up to five syllables by providing a probability of the absence of character spacing P(a1) and a noise entry probability P(a2). From the above formula (44), the following result is obtained.

[formula 66]

$$P(a_{jk0}), P(a_{jkL_j})$$

This formula is a term concerning whether or not noise occurs at both ends. In general, probabilities at which noises exist are different from each other between characters and at both ends. Thus, a value other than noise entry probability $P(a2)$ is assumed to be defined.

A relationship between $P(wc)$ and $P(wc, h)$ or a relationship between $P(wd)$ and $P(wd, h)$ depends on how the effects as described previously (such as position in a leter) are modeled and/or approximated. Thus, a description is omitted here.

6.3 Description of a Non-Character $\gamma$

Consider a case in which characters specified as a first candidate are used as character characteristics, as shown in subsection 3.2.1. When a non-character "$\gamma$" is extracted as characteristics, the characters generated as a first candidate are considered to be similarly probable. Then, such non-character is handled as follows.

[formula 67]

$$P(e_i|\gamma) = \frac{1}{n(E)} \qquad\qquad (45)$$

6.4 Specific Example

As in section 5.3, for example, consider that a city name is read in address reading of a mail P in English, as shown in FIG. 17.

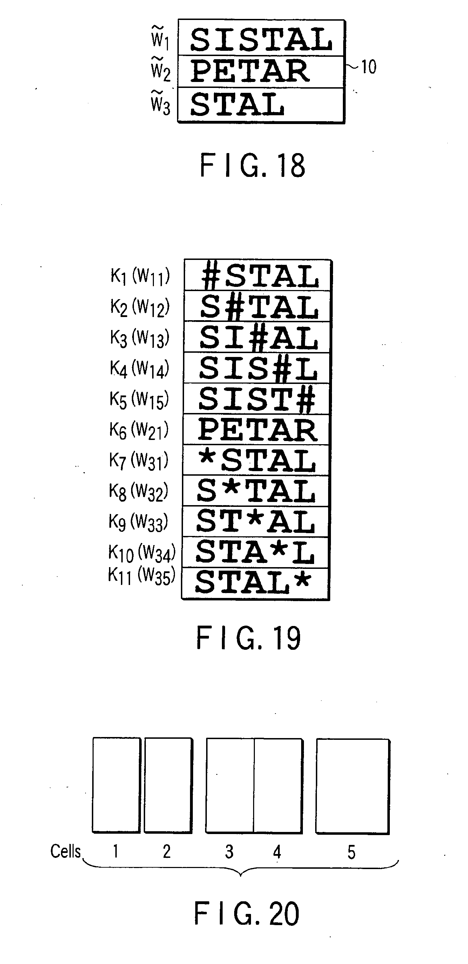

In order to clarify the characteristics of this section, there is provided an assumption that word delimiting is completely successful, and a character string consisting of a plurality of words does not exist in a category. FIG. 17 shows the result of delimiting processing of a character pattern that corresponds to a portion at which it is believed that a city name identified by the above described delimiting processing is written, wherein a total of five characters are detected. The word dictionary 10 stores all city names, as shown in FIG. 18. In this case, three city names are stored as SITAL, PETAR, and STAL.

FIG. 19 illustrates a category set, wherein character strings each consisting of five characters are listed from among derivative character strings made based on the word dictionary 10. When all derivative character strings each consisting of five characters are listed, for example, "P#A*R" or the like deriving from "PETAR" must be included. However, in the case where a probability $P(a)$ of the absence of character spacing or noise entry probability $P(a2)$ described in section 6.2 is smaller than a certain degree, such characters can be ignored. In this example, such characters are ignored.

Categories k1 to k5 each are made of a word "SISTAL"; a category k6 is made of a word "PETAR"; and categories k7 to k11 each are made of a word "STAL". Specifically, the category k1 is made of "#STAL"; the category k2 is made of "S#TAL"; the category k3 is made of "SI#AL"; the category k4 is made of "SIS#L"; the category k5 is made of "SIST#"; the category k6 is made of "PETAR"; the category k7 is made of "*STAL"; the category k8 is made of "S*TAL"; the category k9 is made of "ST*AL"; the category k10 is made of "STA*L"; and the category k11 is made of "STA*L".

Character recognition is performed for each of the character patterns shown in FIG. 17 by the above described character recognition processing. The posteriori probability is calculated by each category shown in FIG. 19 by on the basis of the character recognition result obtained by such each character pattern.

Although characters used for calculation (= character recognition result) are various, an example using characters specified as a first candidate is shown here. In this case, the character recognition result is "S, E, T, A, L" in order from the left-most character, relevant to each character pattern shown in FIG. 17. In this way, in accordance with the above formula (16), a change $P(k2|r)/P(k2)$ in a probability of generating the category k2 (S#TAL) shown in FIG. 2, the change caused by knowing the character recognition result, is obtained as follows.

[formula 68]

$$\frac{P(k_2|r)}{P(k_2)} \approx \frac{P("S"|"S")}{P("S")} \frac{P("E"|"\#")}{P("E")}$$

$$\cdot \frac{P("T"|"T")}{P("T")} \frac{P("A"|"A")}{P("A")} \frac{P("L"|"L")}{P("L")} \qquad (46)$$

Further, by using approximation described in section 3.2 and subsection 4.2.2, for example, when p = 0.5 and n (E) = 26, q = 0.02. Thus, the above formula (46) is used for calculation as follows.
[formula 69]

$$\frac{P(k_2|r)}{P(k_2)} \approx P \cdot \frac{1}{n(E)} \cdot p \cdot p \cdot p \cdot n(E)^5 \tag{47}$$

$$= p \cdot p \cdot p \cdot p \cdot n(E)^4 \approx 28600$$

Referring now to the above calculation process, this calculation is equivalent to calculation of four characters other than non-characters. Similarly, the other categories are calculated. Here, k6, k7, and k8 easily estimated to indicate large values are calculated as a typical example.
[formula 70]

$$\frac{P(k_6|r)}{P(k_6)} \approx q \cdot p \cdot p \cdot p \cdot q \cdot n(E)^5 \approx 594$$

$$\frac{P(k_7|r)}{P(k_7)} \approx \frac{1}{n(E)} \cdot q \cdot p \cdot p \cdot p \cdot n(E)^5$$

$$= q \cdot p \cdot p \cdot p \cdot n(E)^4 \approx 1140 \tag{48}$$

$$\frac{P(k_8|r)}{P(k_8)} \approx p \cdot \frac{1}{n(E)} \cdot p \cdot p \cdot p \cdot n(E)^5$$

$$= p \cdot p \cdot p \cdot p \cdot n(E)^4 \approx 28600$$

In comparing these values, chapter 5 assumes that the values of P(ki) is equal to each other. However, in this section, as described in section 6.2, a change occur with P(ki) by considering the absence of character spacing or noise entry. Thus, all the values of P(ki) before such change occurs is assumed to be equal to each other, and P(ki) = P0 is defined. P0 can be considered to be P(wc) in the above formula (44). In addition, P(ki) after such change has occurred is considered to be P(wd) in the above formula (44). Therefore, P(ki) after such change has occurred is obtained as follows.
[formula 71]

$$P(k_i) = P_0 \left\{ \prod_{l=1}^{L_j-1} P(a_{jk1}) \right\} P(a_{jk0}) P(a_{jkL_j}) \tag{49}$$

In this formula, assuming that a probability of the absence of character spacing P(a1) = 0.05, a probability of noise entry into character space P(a0) = 0.002, a probability of noise entry into both ends is P' (a2) = 0.06, for example, P(k2) is calculated as follows.
[formula 72]

$$P(k_2) = P_0 \cdot 0.948 \cdot 0.05 \cdot 0.948 \cdot 0.948 \cdot 0.948 \cdot 0.94 \cdot 0.94$$

$$\approx 0.0357 P_0 \tag{50}$$

In calculation, a probability when neither character spacing nor noise entry occurs P(a0) = 1 - P(a1) - P(a2) = 0.948 is used, and a probability free of noise entry at both ends P' (a0) = 1 - P' (a2) = 0.94 is used.

Similarly, when P(k6), P(k7), and P(k8) are calculated, the following result is obtained.

[formula 73]

$$P(k_6) = P_0 \cdot 0.948 \cdot 0.948 \cdot 0.948 \cdot 0.948 \cdot 0.94 \cdot 0.94$$
$$\approx 0.714P_0$$
$$P(k_7) = P_0 \cdot 0.948 \cdot 0.948 \cdot 0.948 \cdot 0.06 \cdot 0.94$$
$$\approx 0.0481P_0$$
$$P(k_8) = P_0 \cdot 0.002 \cdot 0.948 \cdot 0.948 \cdot 0.94 \cdot 0.94$$
$$\approx 0.00159P_0 \tag{51}$$

When the above formulas (50) and (51) are changed by using the above formulas (47) and (48), the following result is obtained.

[formula 74]

$$P(k_2|r) \approx 28600 \cdot 0.0357P_0 \approx 1020P_0$$
$$P(k_6|r) \approx 594 \cdot 0.714P_0 \approx 424P_0$$
$$P(k_7|r) \approx 1140 \cdot 0.0481P_0 \approx 54.8P_0 \tag{52}$$
$$P(k_8|r) \approx 28600 \cdot 0.00159P_0 \approx 45.5P_0$$

When the other categories are calculated similarly as a reference, the following result is obtained.

[formula 75]

$$P(k_1|r) \approx 40.7P_0, P(k_3|r) \approx 40.7P_0,$$
$$P(k_4|r) \approx 1.63P_0, P(k_5|r) \approx 0.0653P_0,$$
$$P(k_9|r) \approx 1.81P_0, P(k_{10}|r) \approx 0.0727P_0,$$
$$P(k_{11}|r) \approx 0.0880P_0$$

From the foregoing, the highest posteriori probability is the category k2, and it is estimated that the city name written in FIG. 16 is SISTAL, and no character spacing between I and S is provided.

Also, an example of the calculation for error suppression will be explained. The denominator is the total sum of the aforementioned P(k1|r) to P(k11|r), i.e. 40.7P0 + 1020P0 + 40.7P0 + 1.63P0 + 0.0653P0 + 424P0 + 54.8P0 + 45.5P0 + 1.81P0 + 0.0727P0 + 0.0880P0 ≈ 1630P0 . The numerator is the aforementioned P(k1|r) to P(k11|r). Thus, the calculation is made only for the maximum value k2. Then,

[formula 76]

$$P(k_2 \mid r) \approx \frac{1020P_0}{1630P_0} \approx 0.63 \tag{52-2}$$

Assuming the rejection for the probability of 0.7 or less, the recognition result is rejected.

As described above, according to the third embodiment, the characters of words contained in a word dictionary include information on non-characters as well as characters. In addition, a probability of generating words each consisting of characters that include non-character information is set based on a probability of generating words each consisting of characters that do not include any non-character information. In this manner, word recognition can be performed by using an evaluation function based on a posteriori probability considering the absence of character spacing or noise entry. Therefore, even in the case where no character spacing is provided or noise entry occurs, word recognition can be performed precisely.

Also, the rejection process can be executed with high accuracy.

Now, a description will be given to Bayes Estination according to a fourth embodiment of the present invention when a character is not identified uniquely. In this case, the Bayes Estimation is effective for characters with delimiters such as Japanese Kanji characters or Kana characters. In addition, the Bayes Estimation is also effective to calligraphic characters in English which includes a case where many break candidates other than actual character breaks must be presented.

## 7. INTEGRATION OF CHARACTER DELIMITING

The methods described in chapters 1 to 6 assume that characters themselves are not delimited. However, there is a case in which characters such as Japanese Kanji or Kana characters themselves are delimited into two or more. For example, in a Kanji character "明", when character delimiting is performed, "日" and "月" are identified separately as character candidates. At this time, a plurality of character delimiting candidates appear depending on whether these two character candidates are integrated with each other or separated from each other.

Such character delimiting cannot be achieved by the method described in chapters 1 to 6. Conversely, in the case where many characters free of being spaced from each other are present, and are subjected to delimiting processing, the characters themselves as well as actual character contacted portions may be cut. Although it will be described later in detail, it would be better to permit cutting of characters themselves to a certain extent as a strategy of recognition. In this case as well, the methods described in characters 1 to 6 cannot be used similarly. In this chapter, Bayes Estimation is performed which corresponds to a plurality of character delimiting candidates caused by character delimiting.

### 7.1 Character Delimiting

In character delimiting targeted for character contact, processing for cutting a character contact is performed. In this processing, when a case in which a portion that is not a character break is specified as a break candidate is compared with a case in which a character break is not specified as a break candidate, the latter affects recognition. The reasons are stated as follows.

· When a portion that is not a character break is specified as a break candidate

A case in which a character break is executed at a character break and a case in which such character break is not performed can be attempted. Thus, if two much breaks occur, correct character delimiting is not always performed.

· When a character break is not specified as a break candidate

There is no means for obtaining correct character delimiting.

Therefore, in character delimiting, it is effective to specify many break candidates other than character breaks. However, when a case in which a character break is performed at a break candidate and a case in which such break is not performed is attempted, it means that there are a plurality of character delimiting patterns. In the methods described in chapters 1 to 6, comparison between different character delimiting pattern candidates cannot be performed. Therefore, a method described here is used to solve this problem.

### 7.2 Definition of Formulas

The definitions are added and changed as follows based on the definitions in chapter 6.
Changes
· Break state set S = {s0, s1, s2, (, s3)}
s0: Word break
s1: Character break
s2: No character break (s3: Start or end of line)
"Break" defined in chapter 5 and subsequent means a word break, which falls into s0. "No break" falls into s1 and s2.
· L: Number of portions divided at a break candidate (referred to as cell)
Addition

[formula 77]

· Unit uij (l ≦ j)

This unit is combined between i-th cell and

(j - i)-th cell.

Change

· Category K = {ki}

[formula 78]

$$k_i = (w_{jk}, m_{jk}, h), \ w_{jk} \in W$$

$m_{jk} = (m_{jk1}, m_{jk2}, ..., m_{jkL_{jk}}, m_{jkL_{jk}} + 1)$

$m_{jk1}$: Start cell number of unit to which character "$w_{jkl}$" applies. The unit can be expressed as "$u_{mjkl}m_{jkl+1}$".

h: A position of a derivable character string "$w_{jk}$". A derivative character string "$w_{jk}$" starts from a (h + 1)-th cell.

Addition

[formula 79]

· Break pattern k'i = (k'$_{i0}$, k'$_{i1}$, ..., k'$_{iL_C}$) k'i: Break state in ki

$L_C$: Total number of cells included in all units to which a derivative character string "$w_{jk}$" applies.

$LC = m_{jkL_{jk}}+1 - m_{jk1}$

$k'_{il}$: State $k'_{il} \in S$ in a break between

(h + 1)-th cell and (h + 1 + 1)-th cell

$$k'_{il} = \begin{cases} s_0 \ (\text{when a word break occurs, namely,} \\ \quad \text{when } \exists_n, \ w'_{jkn} = s_0, \ l = m_{jkn+1} - h - 1) \\ \quad s_2 \ (\text{when } \forall_n, \ l \neq m_{jkn} - h - 1) \\ s_1 \ (\text{when a case other than the above occurs}) \end{cases}$$

Change

[formula 80]

· Character characteristics

$r_C = (r_{C12}, r_{C13}, r_{C14}, ..., r_{C1L+1}, R_{C23}, r_{C24}, ..., r_{C2L+1}, ..., r_{CLL+1})$

$r_{Cn_1n_2}$: Character characteristics of unit $u_{n_1n_2}$

· Characteristics of character spacing $r_S = (r_{S0}, r_{S1}, ..., r_{SL})$

$r_{Sn}$: Characteristics of character spacing between n-th cell and (n + 1)-th cell

At this time, a posterior probability P(ki|r) is similar to the above formulas (23) and (24).

[formula 81]

$$P(k_i|r) = \frac{P(r_C|k_i)P(r_S|k_i)P(k_i)}{P(r_C, r_S)} \tag{53}$$

P(rc|ki) is represented as follows.

[formula 82]

$$P(r_C|k_i) = P(r_{Cm_{jk1}m_{jk2}}|w_{jk1})P(r_{Cm_{jk2}m_{jk3}}|w_{jk2})\cdots$$

$$\cdot P(r_{Cm_{jkL_{jk}}m_{jkL_{jk}+1}}|w_{jkL_{jk}})$$

$$\cdot P(\cdots, r_{n_1n_2}, \cdots|k_i)$$

それ以外の$(n_1n_2)$

$$= \left\{ \prod_{n=1}^{L_{jk}} P(r_{Cm_{jkn}m_{jkn+1}}|w_{jkn}) \right\}$$

$$\cdot \left\{ \begin{array}{c} P(\cdots, r_{n_1n_2}, \cdots|k_i) \\ n_1, n_2 \\ \forall_{b,1 \le b \le L_{jk}, (n_1, n_2) \ne (m_{jkb}, m_{jkb+1})} \end{array} \right\}$$

$$(54)$$

P(rs|ki) is represented as follows.
[formula 83]

$$P(r_S|k_i) = P(r_{S1}, r_{S2}, \cdots, r_{Sh-1}|k_i)$$

$$\cdot P(r_{Sh}|k'_{i0})P(r_{Sh+1}|k'_{i1})\cdots P(r_{Sh+L_C}|k'_{iL_C})$$

$$\cdot P(r_{Sh+L_C+1}, \cdots, r_{SL-1}|k_i)$$

$$(55)$$

In P(ki), "mjk" is contained in a category "ki" in this section, and thus, the effect of the "mjk" should be considered. Although it is considered that the "mjk" affect the shape of a unit to which individual characters apply, characters that apply to such unit, a balance in shape between the adjacent units or the like, a description of its modeling will be omitted here.

7.3 Approximation for Practical Use

7.3.1 Approximation relevant to a portion free of a character string and normalization of the number of characters

When approximation similar to that in subsection 4.2.1 is used for the above formula (54), the following result is obtained.
[formula 84]

$$P(r_C|k_i) \approx \prod_{n=1}^{L_{jk}} P(r_{Cm_{jkn}m_{jkn+1}}|w_{jkn})$$

$$\prod_{n_1,n_2} P(r_{Cn_1n_2}) \qquad (56)$$

$$\forall b,1\leq b\leq L_{jk},(n_1,n_2)\neq(m_{jkb},m_{jkb+1})$$

In reality, it is considered that there is any correlation among "r cn1n3", "r cn1n2", and "r cn2n3", and thus, this approximation is more coarse than that described in subsection 4.2.1.

In addition, when the above formula (55) is approximated similar, the following result is obtained.
[formula 85]

$$P(r_S|k_i) = \prod_{n=0}^{L_C} P(r_{Sh+n}|k'_{in}) \prod_{\substack{1\leq n\leq h-1 \\ h+L_C+1\leq n\leq L-1}} P(r_{Sn}) \qquad (57)$$

Further, when P(ki|r)/P(ki) is calculated in a manner similar to that described in subsection 5.2.1, the following result is obtained.
[formula 86]

$$\frac{P(k_i|r)}{P(k_i)} \approx \frac{P(k_i|r_C)}{P(k_i)}\frac{P(k_i|r_S)}{P(k_i)}$$

$$\approx \prod_{n=1}^{L_{jk}}\frac{P(r_{Cm_{jkn}m_{jkn+1}}|w_{jkn})}{P(r_{Cm_{jkn}m_{jkn+1}})}\prod_{n=0}^{L_C}\frac{P(r_{Sh+n}|k'_{in})}{P(r_{Sh+1})}$$

$$(58)$$

As in the above formula (32), with respect to the above formula (58), there is no description concerning a portion at which a derivative character string "wd" applies, and "normalization by denominator" can be performed.

7.3.2 Break and character spacing characteristics "rs"

Unlike chapters 1 to 6, in this subsection, s2 (No character break) is specified as a break state. Thus, in the case where characteristics of character spacing set D is used as a set of character spacing characteristics in a manner similar to that described in subsection 5.2.2, the following result is obtained.
[formula 87]

$$P(d_k|s_1)_{k=0,1,2\ 1=0,1,2}$$

It must be noted here that all of these facts are limited to a portion specified as "a break candidate", as described in section 7.1. s2 (No character break) means that a character is specified as a break candidate, but no break occur. This point should be noted when a value is obtained by using the formula below.
[formula 88]

$$P(d_k|s_2)_{k=0,1,2}$$

This applies to a case in which a value is obtained by using the formula below.
[formula 89]

$$P(d_k)_{k=0,1,2}$$

7.3.3. Error suppression

The above formula (58) is obtained based on rough approximation and may pose the accuracy problem. In order to further improve the accuracy, therefore, formula (53) is modified as follows:
[formula 90]

$$
\begin{aligned}
P(k_i \mid r) &= \frac{P(r_C, r_S \mid k_i)P(k_i)}{P(r_C, r_S)} \\
&= \frac{P(r_C, r_S \mid k_i)P(k_i)}{\sum_t P(r_C, r_S \mid k_t)P(k_t)} \qquad (53\text{-}2) \\
&\approx \frac{P(k_i)\text{matchC}(k_i)}{\sum_t P(k_t)\text{matchC}(k_t)}
\end{aligned}
$$

where
[formula 91]

$$\text{matchC}(k_i) = \prod_{n=1}^{L_{jk}} \frac{P(r_{Cm_{jkn}m_{jkn+1}} \mid w_{jkn})}{P(r_{Cm_{jkn}m_{jkn+1}})} \prod_{n=0}^{L_C} \frac{P(r_{Sh+n} \mid k'_{in})}{P(r_{Sh+n})}$$

$$(53\text{-}3)$$

As a result, the approximation used for the denominator on the second line of formula (58) can be avoided and the error is suppressed.
The formula "matchC(ki)" is identical with formula (58). In other words, formula (53-2) can be calculated by calculating and substituting formula (58) for each ki.

7.4 Specific Example

As in section 6.4, consider that a city name is read in address reading of mail P written in English.
For clarifying the characteristics of this section, it is assumed that word delimiting is completely successful; a character string consisting of a plurality of words does not exist in a category, no noise entry occurs, and all the character breaks are detected by character delimiting (That is, unlike section 6, there is no need for category concerning noise or space-free character).

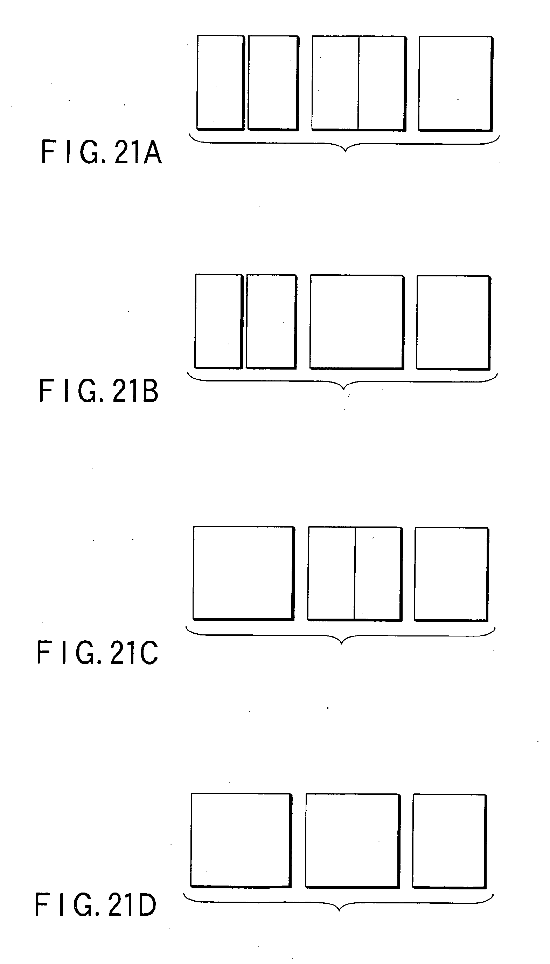

FIG. 20 shows a portion at which it is believed that a city name is written, and five cells are present. FIG. 21A to FIG. 21D show possible character delimiting pattern candidates. In this example, for clarity, it is assumed that the spacing between cells 2 and 3 and the spacing between cells 4 and 5 are always found to have been delimited (a probability at which characters are not delimited is very low, and may be ignored).

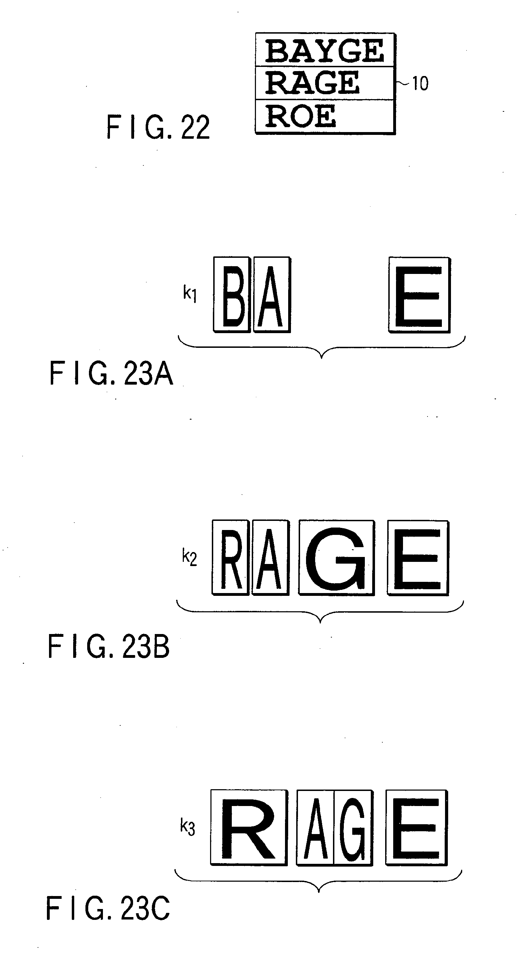

The delimiting candidates are present between cells 1 and 2 and between cells 3 and 4. The possible character delimiting pattern candidates are exemplified as shown in FIG. 21A to FIG. 21D. FIG. 22 shows the contents of the word directory 10 in which all city names are stored. In this example, there are three candidates for city names.

In this case, three city names are stored as BAYGE, RAGE, and ROE.

FIG. 23A to FIG. 23D each illustrate a category set. It is assumed that word delimiting is completely successful. Thus, NAYGE applies to FIG. 21A; RAGE applies to FIG. 21B and FIG. 21C; and ROE applies to FIG. 21D.

In the category k1 shown in FIG. 23A, the interval between cells 1 and 2 and that between cells 3 and 4 correspond to separation points between characters.

In the category k2 shown in FIG. 23B, the interval between cells 1 and 2 corresponds to a separation point between characters, while the interval between cells 3 and 4 does not.

In the category k3 shown in FIG. 23C, the interval between cells 3 and 4 corresponds to a separation point between characters, while the interval between cells 1 and 2 does not.

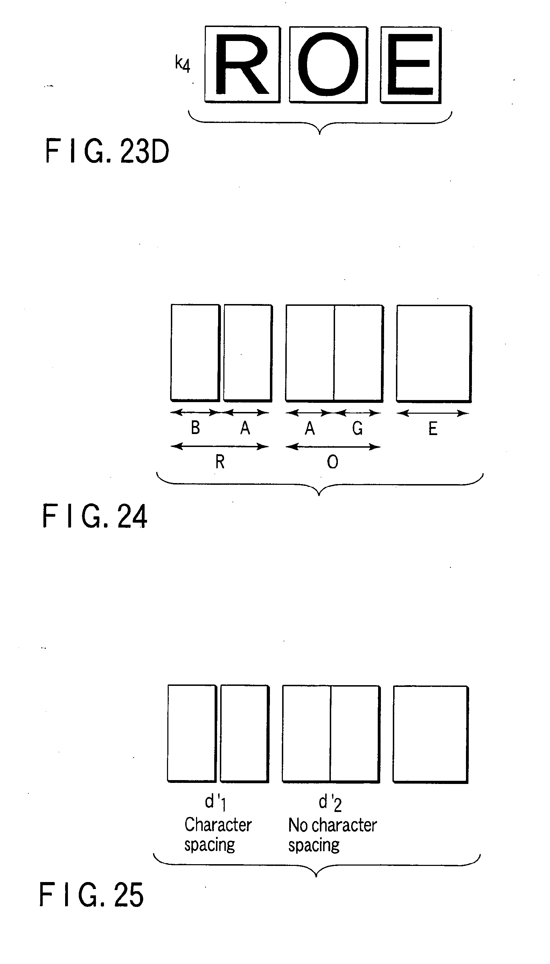

In the category k4 shown in FIG. 23D, the interval between cells 1 and 2 and that between cells 3 and 4 does not correspond to separation points between characters.

Each of the units that appear in FIG. 23A to FIG. 21D is applied to character recognition, and the character recognition result is used for calculating the posteriori probabilities of the categories shown in FIG. 23A to FIG. 23D. Although characteristics used for calculation (= character recognition result) are various, an example using characters specified as a first candidate is shown below.

FIG. 24 shows the recognition result of each unit. For example, this figure shows that a first place of the recognition result has been R in a unit having cells 1 and 2 connected to each other.

Although it is considered that character spacing characteristics are various, an example described in subsection 5.2.2 is summarized here, and the following is used.

· Set of character spacing characteristics
D' = {d' 1, d' 2}
d' 1: Character spacing
d' 2: No character spacing

FIG. 27 shows characteristics of character spacing between cells 1 and 2, and between cells 3 and 4. Character spacing is provided between cells 1 and 2, and no character spacing is provided between cells 3 and 4.

When approximation described in subsection 7.3.1 is used, in accordance with the above formula (58), a change $P(k1|rc)/P(k1)$ of a probability of generating category "k1" (BAYGE), the change caused by knowing the recognition result shown in FIG. 24, is obtained by the following formula.

[formula 92]

$$\frac{P(k_1|r_C)}{P(k_1)} \approx \frac{P(\text{"B"}|\text{"B"})}{P(\text{"B"})} \frac{P(\text{"A"}|\text{"A"})}{P(\text{"A"})} \cdot \frac{P(\text{"A"}|\text{"Y"})}{P(\text{"A"})} \frac{P(\text{"G"}|\text{"G"})}{P(\text{"G"})} \frac{P(\text{"E"}|\text{"E"})}{P(\text{"E"})} \tag{59}$$

In the above formula (58), a change $P(ki|rs)/P(ki)$ caused by knowing characteristics of character spacing shown in FIG. 25 is obtained by the following formula.

[formula 93]

$$\frac{P(k_1|r_S)}{P(k_1)} \approx \frac{P(d_1'|s_1)}{P(d_1')} \frac{P(d_2'|s_1)}{P(d_2')} \tag{60}$$

In order to make a calculation using the above formula (59), when approximation described in subsections 3.2.2 and 4.2.2 is used, for example, when p = 0.5 and n (E) = 26, q = 0.02. Thus, the above formula (59) is used for calculation as follows.

[formula 94]

$$\frac{P(k_1|r_C)}{P(k_1)} \approx p \cdot p \cdot q \cdot p \cdot p \cdot n(E)^5 \approx 14900 \qquad (61)$$

In order to make calculation using the above formula (60), it is required to establish the following formula in advance.

[formula 95]

$$P(d'_k|s_1)_{k=1,2 \ 1=1,2} \text{ and } P(d'_k)_{k=1,2}$$

As an example, it is assumed that the following values shown in tables 4 and 5 are obtained.

[Table 4]

Table 4
Values of $P(d_k', s_1)$

| L \ K | 1: Character spacing $(d_1')$ | 2: No character spacing $(d_2')$ | Total |
|---|---|---|---|
| 1: Character break $(s_0)$ | $P(d_1', s_1)$ 0.45 | $P(d_2', s_1)$ 0.05 | $P(s_1)$ 0.5 |
| 2: No character break $(s_1)$ | $P(d_1', s_2)$ 0.01 | $P(d_2', s_2)$ 0.49 | $P(s_2)$ 0.5 |
| Total | $P(d_1')$ 0.46 | $P(d_2')$ 0.54 | 1 |

[Table 5]

Table 5
Values of $P(d_k'|s_1)$

| l \ k | 1: Character spacing $(d_1')$ | 2: No character spacing $(d_2')$ |
|---|---|---|
| 1: Character break $(s_1)$ | $P(d_1'|s_1)$ 0.90 | $P(d_2'|s_1)$ 0.10 |
| 2: No character break $(s_2)$ | $P(d_1'|s_2)$ 0.02 | $P(d_2'|s_2)$ 0.98 |

Table 4 lists values obtained by formula.

[formula 96]

$$P(d'_k \cap s_1)$$

Table 5 lists values of P(d'k|s1). In this case, note that a relationship shown by the following formula is met.
[formula 97]

$$P(d'_k \cap s_1) = P(d'_k|s_1)p(s_1)$$

In reality, P(d'k|s1)/P(d'k) is required for calculation using the above formula (60). Thus, Table 6 lists the thus calculated values.
[Table 6]

Table 6
Values of $P(d_k'|s_1)/P(d_k')$

| k \ l | 1: Character spacing $(d_1')$ | 2: No character spacing $(d_2')$ |
|---|---|---|
| 1: Character break $(s_1)$ | $P(d_1'|s_1)$ 1.96 | $P(d_2'|s_1)$ 0.19 |
| 2: No character break $(s_2)$ | $P(d_1'|s_2)$ 0.043 | $P(d_2'|s_2)$ 1.18 |

The above formula (60) is used for calculation as follows, based on the above values shown in Table 6.
[formula 98]

$$\frac{P(k_1|r_S)}{P(k_1)} \approx 1.96 \cdot 0.19 \approx 0.372 \qquad (62)$$

From the above formula (60), a change P(kl|r)/P(k1) caused by knowing the character recognition result shown in FIG. 24 and the characteristics of character spacing shown in FIG. 25 is represented by a product between the above formulas (61) and (62), and the following result is obtained.
[formula 99]

$$\frac{P(k_1|r)}{P(k_1)} \approx 14900 \cdot 0.372 \approx 5543 \qquad (63)$$

Similarly, with respect to k2 to k4 as well, when P(ki|rc)/P(ki), P(ki|rs)/P(ki), and P(ki|r)/P(ki) are obtained, the following result is obtained.
[formula 100]

$$\frac{P(k_2|r_C)}{P(k_2)} \approx q \cdot p \cdot q \cdot p \cdot n(E)^4 \approx 45.7$$

$$\frac{P(k_3|r_C)}{P(k_3)} \approx p \cdot p \cdot p \cdot p \cdot n(E)^4 \approx 28600 \qquad (64)$$

$$\frac{P(k_4|r_C)}{P(k_4)} \approx p \cdot p \cdot p \cdot n(E)^3 = 2197$$

[formula 101]

$$\frac{P(k_2|r_S)}{P(k_2)} \approx 1.96 \cdot 1.81 \approx 3.55$$

$$\frac{P(k_3|r_S)}{P(k_3)} \approx 0.043 \cdot 0.19 \approx 0.00817 \qquad (65)$$

$$\frac{P(k_4|r_S)}{P(k_4)} \approx 0.043 \cdot 1.81 \approx 0.0778$$

[formula 102]

$$\frac{P(k_2|r)}{P(k_2)} \approx 45.7 \cdot 3.55 \approx 162$$

$$\frac{P(k_3|r)}{P(k_3)} \approx 28600 \cdot 0.00817 \approx 249 \qquad (66)$$

$$\frac{P(k_4|r)}{P(k_4)} \approx 2197 \cdot 0.0778 \approx 171$$

In comparing these results, although it is assumed that values of P(ki) are equal to each other in chapters 1 to 5, the shape of characters is considered in this section.

In FIG. 21D, the widths of units are the most uniform. In FIG. 21A, these widths are the second uniform. However, in FIG. 21B and FIG. 21C, these widths are not uniform.

A degree of this uniformity is modeled by a certain method, and the modeled degree is reflected in P(ki), thereby enabling more precise word recognition. As long as such precise word recognition is achieved, any method may be used here.

In this example, it is assumed that the following result is obtained.

[formula 103]

$$P(k_1) : P(k_2) : P(k_3) : P(k_4) = 2 : 1 : 1 : 10 \qquad (67)$$

When a proportion content Pi is defined, and the above formula (67) is deformed by using the formulas (63) and 66, the following result is obtained.

[formula 104]

$$P(k_1|r) \approx 5543 \cdot 2P_1 \approx 11086P_1$$

$$P(k_2|r) \approx 162 \cdot P_1 \approx 162P_1$$

$$P(k_3|r) \approx 249 \cdot P_1 \approx 249P_1 \tag{68}$$

$$P(k_4|r) \approx 171 \cdot 10P_1 \approx 1710P_1$$

From the foregoing, it is assumed that the highest posteriori probability is category "ki", and a city name is BAYGE.

As the result of character recognition shown in FIG. 24, the highest priority is category k3 caused by the above formulas (61) and (64). As the result of character spacing characteristics shown in FIG. 25, the highest priority is category k2 caused by the above formulas (62) and (65). Although the highest value in evaluation of balance in character shape is category k4, estimation based on all integrated results is performed, whereby category k1 can be selected.

Also, an example of the calculation for error suppression described in subsection 7.3.3 will be explained below. First, formula (53-2) is calculated. The denominator is the total sum of formula (68), i.e. 11086P1 + 162P1 + 249P1 + 1710P1 $\approx$ 13200P1. The numerator is each result of formula (68). Thus,

[formula 105]

$$P(k_1 \mid r) \approx \frac{11086}{13200P_1} \approx 0.84$$

$$P(k_2 \mid r) \approx \frac{162}{13200P_1} \approx 0.012$$

$$P(k_3 \mid r) \approx \frac{249}{13200P_1} \approx 0.019 \tag{68-2}$$

$$P(k_4 \mid r) \approx \frac{1710}{13200P_1} \approx 0.13$$

Assuming the rejection for the probability of 0.9 or less, the recognition result is rejected.

In this manner, according to the fourth embodiment, an input character string corresponding to a word to be recognized is delimited for each character; plural kinds of delimiting results are obtained considering character spacing by this character delimiting; recognition processing is performed for each of the characters specified as all of the obtained delimiting results; and a probability at which there appears characteristics obtained as the result of character recognition by conditioning characteristics of the characters and character spacing of the words contained in a word dictionary that stores candidates of the characteristics of a word to be recognized and character spacing of the word. In addition, the thus obtained probability is divided by a probability at which there appears characteristics obtained as the result of character recognition; each of the above calculation results obtained for each of the characteristics of the characters and character spacing of the words contained in the word dictionary is multiplied relevant to all the characters and character spacing; all the computation results obtained for each word in the word dictionary are added up; the computation results obtained on each character of each word in the word dictionary are divided by the above added-up computation results; and based on this result, the word recognition result is obtained.

That is, in word recognition using the character recognition result, an evaluation function based on the posteriori probability is used in consideration of at least the ambiguity of character delimiting. In this manner, even in the case where character delimiting is not reliable, word recognition can be performed precisely.

Also, the rejection process can be executed with high accuracy.

According to the present invention, in word recognition using the character recognition result, even in the case where the number of characters in a word is not constant, word recognition can be performed precisely by using an evaluation function based on a posteriori probability that can be used even in the case where the number of characters in a word is not always constant.

Also, the rejection process can be executed with high accuracy.

According to the present invention, in word recognition using the character recognition result, even in the case where word delimiting is not reliable, word recognition can be performed precisely by using an evaluation function based on a posteriori probability considering at least the ambiguity of word delimiting.

Also, the rejection process can be executed with high accuracy.

According to the present invention, in word recognition using the character recognition result, even in the case where no character spacing is provided, word recognition can be performed precisely by using an evaluation function based on a posteriori probability considering at least the absence of character spacing even in the case where no character spacing is provided.

Also, the rejection process can be executed with high accuracy.

According to the present invention, in word recognition using the character recognition result, even in the case where no character spacing is provided, word recognition can be performed precisely by using an evaluation function based on a posteriori probability considering at least noise entry even in the case where the noise entry occurs.

Also, the rejection process can be executed with high accuracy.

According to the present invention, in word recognition using the character recognition result, even in the case where character delimiting is not reliable, word recognition can be performed precisely by using an evaluation function based on the posteriori probability considering at least the ambiguity of character delimiting.

Also, the rejection process can be executed with high accuracy.

The present invention is not limited to the embodiments described above, but can be embodied with the component elements thereof modified without departing from the spirit and scope of the invention. Also, various inventions can be formed by appropriately combining a plurality of the component elements disclosed in the aforementioned embodiments. For example, several ones of all the component elements included in the embodiments may be deleted. Further, the component elements included in different embodiments may be combined appropriately.

Industrial Applicability

According to the invention, it is possible to provide a word recognition method and a word recognition program in which the error can be suppressed in the approximate calculation of the posteriori probability and the rejection can be made with high accuracy.

**Claims**

1. A word recognition method comprising:

 a character recognition processing step of performing recognition processing of an input character string that corresponds to a word to be recognized by each character, thereby obtaining the character recognition result;
 a probability calculation step of obtaining a probability at which characteristics obtained as the character recognition result are generated by the character recognition processing by conditioning characters of words contained in a word dictionary that stores in advance a candidate of the word to be recognized;
 a first computation step of performing a predetermined first computation between a probability obtained by the probability calculation step and the characteristics obtained as the character recognition result by the character recognition processing step;
 a second computation step of performing a predetermined second computation between computation results obtained by the first computation on each character of each word in the word dictionary;
 a third computation step of adding up all computation results obtained for each word in the word dictionary by the second computation;
 a fourth computation step of dividing computation results obtained by the second computation on each character of each word in the word dictionary by computation results in the third computation step;.and
 a word recognition processing step of obtaining a word recognition result of the word based on computation results in the fourth computation step.

2. A word recognition method comprising:

 a delimiting step of delimiting an input character string that corresponds to a word to be recognized by each character;

a step of obtaining plural kinds of delimiting results considering whether character spacing is provided or not by character delimiting caused by the delimiting step;

a character recognition processing step of performing recognition processing for each character as all the delimiting results obtained by the step of obtaining plural kinds of delimiting results;

a probability calculation step of obtaining a probability at which characteristics obtained as the result of character recognition are generated by the character recognition step by computing the characters of the words contained in the word dictionary that stores in advance candidates of words to be recognized;

a first computation step of performing a predetermined first computation between a probability obtained by the probability calculation step and the characteristics obtained as the character recognition result by the character recognition processing step;

a second computation step of performing a predetermined second computation between computation results obtained by the first computation on each character of each word in the word dictionary;

a third computation step of adding up all computation results obtained for each word in the word dictionary by the second computation;

a fourth computation step of dividing computation results obtained by the second computation on each character of each word in the word dictionary by computation results in the third computation step; and

a word recognition processing step of obtaining a word recognition result of the word based on computation results in the fourth computation step.

3. A word recognition program for causing a computer to execute a word recognition process, comprising:

a character recognition processing step of performing recognition processing of an input character string that corresponds to a word to be recognized by each character;

a probability calculation step of obtaining a probability at which characteristics obtained as the character recognition result are generated by the character recognition processing by conditioning characters of words contained in a word dictionary that stores in advance a candidate of the word to be recognized;

a first computation step of performing a predetermined first computation between a probability obtained by the probability calculation step and the characteristics obtained as the character recognition result by the character recognition processing step;

a second computation step of performing a predetermined second computation between computation results obtained by the first computation on each character of each word in the word dictionary;

a third computation step of adding up all computation results obtained for each word in the word dictionary by the second computation;

a fourth computation step of dividing computation results obtained by the second computation on each character of each word in the word dictionary by computation results in the third computation step; and

a word recognition processing step of obtaining a word recognition result of the word based on computation results in the fourth computation step.

F I G. 1

123 ABC STREET
XXXX XXXXX
Z9Z Z9Z

~P

F I G. 2

Start

Image acquisition processing ~ST1

Region detection processing ~ST2

Delimiting processing ~ST3

Character dictionary 9 → Character recognition processing ~ST4

Word dictionary 10 → Word recognition processing ~ST5

Probability table 11

End

F I G. 3

Character pattern delimited as city name

Character recognition result

H A I A

F I G. 4

10

| $k_1$ | MAIR |
| $k_2$ | SORD |
| $k_3$ | ABLA |
| $k_4$ | HAMA |
| $k_5$ | HEWN |

F I G. 5

Character recognition result

| | | A | B | C | ⋯ | H | ⋯ | M | ⋯ | R | ⋯ | Z |
|---|---|---|---|---|---|---|---|---|---|---|---|---|
| Written actually character | A | 0.5 | 0.02 | 0.02 | | 0.02 | | 0.02 | | 0.02 | | 0.02 |
| | B | 0.02 | 0.5 | 0.02 | | 0.02 | | 0.02 | | 0.02 | | 0.02 |
| | C | 0.02 | 0.02 | 0.5 | | 0.02 | | 0.02 | | 0.02 | | 0.02 |
| | ⋮ | | | | | | | | | | | |
| | H | 0.02 | 0.02 | 0.02 | | 0.5 | | 0.02 | | 0.02 | | 0.02 |
| | ⋮ | | | | | | | | | | | |
| | M | 0.02 | 0.02 | 0.02 | | 0.02 | | 0.5 | | 0.02 | | 0.02 |
| | ⋮ | | | | | | | | | | | |
| | R | 0.02 | 0.02 | 0.02 | | 0.02 | | 0.02 | | 0.5 | | 0.02 |
| | ⋮ | | | | | | | | | | | |
| | Z | 0.02 | 0.02 | 0.02 | | 0.02 | | 0.02 | | 0.02 | | 0.5 |

11

F I G. 6

Character recognition result

Written actually character

| | A | B | C | ⋯ | H | ⋯ | M | ⋯ | R | ⋯ | Z |
|---|---|---|---|---|---|---|---|---|---|---|---|
| A | 0.42 | 0.02 | 0.02 | | 0.02 | | 0.02 | | 0.1 | | 0.02 |
| B | 0.02 | 0.5 | 0.02 | | 0.02 | | 0.02 | | 0.02 | | 0.02 |
| C | 0.02 | 0.02 | 0.5 | | 0.02 | | 0.02 | | 0.02 | | 0.02 |
| ⋮ | | | | | | | | | | | |
| H | 0.02 | 0.02 | 0.02 | | 0.32 | | 0.2 | | 0.02 | | 0.02 |
| ⋮ | | | | | | | | | | | |
| M | 0.02 | 0.02 | 0.02 | | 0.2 | | 0.32 | | 0.02 | | 0.02 |
| ⋮ | | | | | | | | | | | |
| R | 0.1 | 0.02 | 0.02 | | 0.02 | | 0.02 | | 0.42 | | 0.02 |
| ⋮ | | | | | | | | | | | |
| Z | 0.02 | 0.02 | 0.02 | | 0.02 | | 0.02 | | 0.02 | | 0.5 |

11

F I G. 7

```
123 ABC STREET
XX XXX XXXXX
Z9Z Z9Z
```
~P

F I G. 8

Character pattern delimited as city name

Space

Character recognition result

S K     C T H

## F I G. 9

10

k₁ COH

k₂ LE ITH

k₃ OTH

k₄ SK

k₅ ST LIN

## F I G. 10

Character recognition result

Written actually character

| | A | B | C | ... | H | I | ... | L | ... | N | ... | T | ... | Z |
|---|---|---|---|---|---|---|---|---|---|---|---|---|---|---|
| A | 0.5 | 0.02 | 0.02 | | 0.02 | 0.02 | | 0.02 | | 0.02 | | 0.02 | | 0.02 |
| B | 0.02 | 0.5 | 0.02 | | 0.02 | 0.02 | | 0.02 | | 0.02 | | 0.02 | | 0.02 |
| C | 0.02 | 0.02 | 0.4 | | 0.02 | 0.02 | | 0.12 | | 0.02 | | 0.02 | | 0.02 |
| ⋮ | | | | | | | | | | | | | | |
| H | 0.02 | 0.02 | 0.02 | | 0.4 | 0.02 | | 0.02 | | 0.12 | | 0.02 | | 0.02 |
| I | 0.02 | 0.02 | 0.02 | | 0.02 | 0.4 | | 0.02 | | 0.02 | | 0.12 | | 0.02 |
| ⋮ | | | | | | | | | | | | | | |
| L | 0.02 | 0.02 | 0.12 | | 0.02 | 0.02 | | 0.4 | | 0.02 | | 0.02 | | 0.02 |
| ⋮ | | | | | | | | | | | | | | |
| N | 0.02 | 0.02 | 0.02 | | 0.12 | 0.02 | | 0.02 | | 0.4 | | 0.02 | | 0.02 |
| ⋮ | | | | | | | | | | | | | | |
| T | 0.02 | 0.02 | 0.02 | | 0.02 | 0.12 | | 0.02 | | 0.02 | | 0.4 | | 0.02 |
| ⋮ | | | | | | | | | | | | | | |
| Z | 0.02 | 0.02 | 0.02 | | 0.02 | 0.02 | | 0.02 | | 0.02 | | 0.02 | | 0.5 |

F I G. 11

123 ABC STREET
XX XXX XXXXX
Z9Z Z9Z

~P

F I G. 12

Character pattern delimited as city name

Character recognition result

Characteristics of character intervals

S　S　　　　　L　I　M

$d_2$　　　　$d_0$　　　　$d_1$　$d_1$

F I G. 13

F I G. 14A

$\tilde{w}_1$ | ST LIN | ～10
$\tilde{w}_1'$ | $S_0\ S_1\quad S_0\quad S_1\ S_1\ S_0$

F I G. 14B

$\tilde{w}_2$ | SLIM | ～10
$\tilde{w}_2'$ | $S_0\ S_1\ S_1\ S_1\ S_0$

F I G. 14C

$\tilde{w}_3$ | SIM | ～10
$\tilde{w}_3'$ | $S_0\ S_1\ S_1\ S_0$

| | |
|---|---|
| $k_1$ | **STLIN** |
| $k_2$ | **SLIM** |
| $k_3$ | **SLIM** |
| $k_4$ | **SIM** |
| $k_5$ | **SIM** |
| $k_6$ | **SIM** |

F I G. 15

123 ABC STREET

XXXXX X XXXX

Z9Z Z9Z

~P

F I G. 16

Character pattern delimited as city name

Character recognition result

S E T A L

F I G. 17

$\widetilde{W}_1$ | SISTAL
$\widetilde{W}_2$ | PETAR ~10
$\widetilde{W}_3$ | STAL

## FIG. 18

$K_1 (W_{11})$ | #STAL
$K_2 (W_{12})$ | S#TAL
$K_3 (W_{13})$ | SI#AL
$K_4 (W_{14})$ | SIS#L
$K_5 (W_{15})$ | SIST#
$K_6 (W_{21})$ | PETAR
$K_7 (W_{31})$ | *STAL
$K_8 (W_{32})$ | S*TAL
$K_9 (W_{33})$ | ST*AL
$K_{10} (W_{34})$ | STA*L
$K_{11} (W_{35})$ | STAL*

## FIG. 19

Cells  1  2  3  4  5

## FIG. 20

EP 2 088 537 A1

FIG. 21A

FIG. 21B

FIG. 21C

FIG. 21D

F I G. 22

F I G. 23A

F I G. 23B

F I G. 23C

F I G. 23D

F I G. 24

F I G. 25

### INTERNATIONAL SEARCH REPORT

| | International application No. |
|---|---|
| | PCT/JP2007/066431 |

**A. CLASSIFICATION OF SUBJECT MATTER**
*G06K9/72*(2006.01)i, *G06K9/62*(2006.01)i

According to International Patent Classification (IPC) or to both national classification and IPC

**B. FIELDS SEARCHED**

Minimum documentation searched (classification system followed by classification symbols)
G06K9/72, G06K9/62

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-283157 A (Toshiba Corp.),<br>12 October, 2001 (12.10.01),<br>Claims 1, 5, 7<br>& US 6847734 B2 | 1-3 |
| Y | JP 5-174195 A (Matsushita Electric Industrial Co., Ltd.),<br>13 July, 1993 (13.07.93),<br>Par. Nos. [0013] to [0019]<br>(Family: none) | 1-3 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 September, 2007 (06.09.07) | 18 September, 2007 (18.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

**Patent documents cited in the description**

- JP 2001283157 A